(19) Europäisches Patentamt
European Patent Office
Office européen des brevets

(11) EP 3 819 323 B1

(12) EUROPÄISCHE PATENTSCHRIFT

(45) Veröffentlichungstag und Bekanntmachung des Hinweises auf die Patenterteilung:
**10.09.2025 Patentblatt 2025/37**

(21) Anmeldenummer: **19207810.3**

(22) Anmeldetag: **07.11.2019**

(51) Internationale Patentklassifikation (IPC):
***C08G 18/48*** *(2006.01)* ***C08G 18/76*** *(2006.01)*
***C08G 77/46*** *(2006.01)*

(52) Gemeinsame Patentklassifikation (CPC):
**C08G 77/46; C08G 18/4829; C08G 18/7621;**
C08G 2110/0008; C08G 2110/0083

# (54) DRUCKVERFORMUNGSREST

COMPRESSION SET

ENSEMBLE DE COMPRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.05.2021 Patentblatt 2021/19**

(73) Patentinhaber: **Evonik Operations GmbH**
**45128 Essen (DE)**

(72) Erfinder:
- **LANDERS, Rüdiger**
  **45257 Essen (DE)**
- **HERMANN, Daniela**
  **40477 Düsseldorf (DE)**
- **WESSELY, Isabelle Denise**
  **76137 Karlsruhe (DE)**
- **FERENZ, Michael**
  **45147 Essen (DE)**
- **ZIEGLER, Rainer**
  **44623 Herne (DE)**

(74) Vertreter: **Evonik Patent Association**
**c/o Evonik Industries AG**
**IP Management**
**Postcode 84/339**
**Rodenbacher Chaussee 4**
**63457 Hanau (DE)**

(56) Entgegenhaltungen:
**EP-A2- 2 481 770** **DE-A1- 102006 038 661**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

## Beschreibung

Die vorliegende Erfindung liegt auf dem Gebiet der Polyurethan(PU)-Schaumstoffe. Sie betrifft insbesondere die Bereitstellung von PU-Heißweichschaumstoff-Formkörpern, wie z.B. Matratzen und/oder Kissen.

PU-Heißweichschaumstoff-Formkörper, wie z.B. PU-Heißweichschaum-haltige Matratzen und/oder Kissen sind aus dem Stand der Technik lange bekannt und finden weltweite Verbreitung. Es hat nicht an Versuchen gemangelt, solche Gegenstände immer weiter zu verbessern. Der Optimierungsbedarf ist bis heute nicht erloschen. Die DE102006038661A1 und die EP2481770A2 offenbaren Zusammensetzungen für PU-Heissweichschaumstoffkörper welche Polyethersiloxane enthalten.

Ein Problem im Zusammenhang mit PU-Heißweichschaumstoff-Formkörpern ist deren Transport und Lagerung. PU-Heißweichschaumstoff-Formkörper, wie z.B. Matratzen, sind sehr sperrig und werden daher für Lagerungs- und Transportzwecke aus Platzgründen oft komprimiert, insbesondere komprimiert und vakuumiert. Große Distributoren liefern bestimmte Matratzen zunehmend komprimiert und in gerollter Form aus.

Solche Verpackungen sind insbesondere für Matratzen weit verbreitet. Bei der Vakuumverpackung wird die Matratze z.B. in einen Beutel aus Plastikfolie gesteckt. Dann wird die so vorverpackte Matratze in eine Presse gelegt und bei offenem Beutelende gepresst. Die Luft entweicht. Danach wird das offene Beutelende luftdicht zugeschweißt. Die so entstandene Vakuumpackung wird dann gerollt und in einen Außenbeutel eingeschoben. Die Matratze kann sich nicht wieder ausdehnen, da der Außenbeutel sie in der Rollenform hält.

Um eine Matratze z.B. so flach zu drücken, wie eine Maschine es beim Rollen schafft, braucht man je nach Matratze zwischen 40.000 und 250.000 Newton. Das entspricht der Gewichtskraft einer Masse von 4 bis 25 Tonnen.

Wie unmittelbar ersichtlich ist, kann eine solche Krafteinwirkung im Zusammenhang mit der Kompression von PU-Heißweichschaumstoff-Formkörpern zu einer Materialermüdung führen. Es ist ein sehr relevantes Problem, PU-Heißweichschaumstoff-Formkörper bereitzustellen, die auch nach längerer Kompression befähigt sind, ihre ursprüngliche Dimension wiederzuerlangen.

Konkrete Aufgabe der vorliegenden Erfindung war vor diesem Hintergrund die Bereitstellung von PU-Heißweichschaumstoff-Formkörpern, wie insbesondere PU-Heißweichschaum-haltigen Matratzen und/oder Kissen, die gut geeignet sind, nach einer Kompression über einen Zeitraum von mindestens 20 Stunden ihre ursprüngliche Form wieder zu erlangen.

Es wurde im Rahmen dieser Erfindung überraschend gefunden, dass die Lösung dieser Aufgabe vom Gegenstand der Erfindung ermöglicht wird.

Gegenstand dieser Erfindung ist ein PU-Heißweichschaumstoff-Formkörper, vorzugsweise Matratze und/oder Kissen, wobei der PU-Heißweichschaumstoff durch Umsetzung mindestens einer Polyolkomponente und mindestens einer Isocyanatkomponente in Gegenwart zumindest einer Verbindung der Formel (1a) sowie zumindest einer Verbindung der Formel (1b) und mindestens eines Treibmittels sowie mindestens eines Katalysators erhalten wurde, wobei

Formel (1a) : $$[R^1Me_2SiO_{1/2}]_a\ [Me_2SiO_{2/2}]_b\ [R^2MeSiO_{2/2}]_c\ [MeSiO_{3/2}]_d\ [SiO_{4/2}]_e$$

mit

a= 2 bis 10, bevorzugt 2 bis 8, besonders bevorzugt 2 bis 5
b= 25 bis 200, bevorzugt 40 bis 150, besonders bevorzugt 45 bis 120
c= 2 bis 40, bevorzugt 2 bis 30, besonders bevorzugt 3 bis 20
d= 0 bis 10, bevorzugt 0 bis 8, besonders bevorzugt 0 bis 5
e= 0 bis 5, bevorzugt 0 bis 3, besonders bevorzugt 0 bis 2
wobei gilt:

$$a+b+c+d+e > 48$$

$R^1$ = Me oder $R^2$
$R^2$ = gleiche oder verschiedene Polyether, erhältlich aus der Polymerisation von Ethylenoxid, Propylenoxid und/oder anderen Alkylenoxiden wie Butylenoxid oder Styroloxid, bevorzugt Polyether der allgemeinen Formel (c),

$$-\left[CH_2\right]_f-O-\left[C_2H_4O\right]_g-\left[C_3H_6O\right]_h-R^3$$ Formel (c)

wobei gilt

f = 0 - 6, bevorzugt 0 - 4, besonders bevorzugt 0 oder 3
g= 0 bis 150, bevorzugt 3 bis 100, besonders bevorzugt 3 bis 70
h=0 bis 150, bevorzugt 0 bis 100, besonders bevorzugt 0 bis 80
wobei gilt

$$g + h > 0$$

$R^3$= OH, Alkyl oder Acetyl, bevorzugt OH, $C_1$ bis $C_6$-Alkyl oder Acetyl, besonders bevorzugt OH, Methyl, Acetyl oder Butyl

und wobei

Formel (1b): $[R^4Me_2SiO_{1/2}]_i\ [Me_2SiO_{2/2}]_j\ [R^5MeSiO_{2/2}]_k\ [MeSiO_{3/2}]_l\ [SiO_{4/2}]_m$

mit

i= 2 bis 10, bevorzugt 2 bis 8, besonders bevorzugt 2 bis 5
j= 0 bis 20, bevorzugt 0 bis 18, besonders bevorzugt 0 bis 15
k= 0 bis 20, bevorzugt 0 bis 15, besonders bevorzugt 0 bis 10
l= 0 bis 10, bevorzugt 0 bis 8, besonders bevorzugt 0 bis 5
m= 0 bis 5, bevorzugt 0 bis 3, besonders bevorzugt 0 bis 2
wobei gilt:

$$i+j+k+l+m < 20$$

$R^4$ = Me oder $R^5$

$R^5$ = gleiche oder verschiedene Polyether, erhältlich aus der Polymerisation von Ethylenoxid, Propylenoxid und/oder anderen Alkylenoxiden wie Butylenoxid oder Styroloxid, bevorzugt Polyether der allgemeinen Formel (d), oder Alkyl $C_3$ bis $C_{15}$,

$$-\left[CH_2\right]_n-O-\left[C_2H_4O\right]_o-\left[C_3H_6O\right]_p-R^6$$ Formel (d)

wobei gilt

n = 0 - 6, bevorzugt 0 - 4, besonders bevorzugt 0 oder 3
o= 0 bis 100, bevorzugt 0 bis 50, besonders bevorzugt 0 bis 25
p=0 bis 100, bevorzugt 0 bis 50, besonders bevorzugt 0 bis 25
wobei gilt

$$o + p > 0$$

$R^6$= OH, Alkyl oder Acetyl, bevorzugt OH, $C_1$ bis $C_6$-Alkyl oder Acetyl, besonders bevorzugt OH, Methyl, Acetyl oder Butyl.

Die Formeln (1a) und (1b) sind als mittlere Summenformeln zu verstehen.

Die Abbildungen Fig. 1 bis 3 zeigen die Ergebnisse von Rollverformungstests als Funktion der Luftdurchlässigkeit. Der Rollverformungstest wird weiter unten genau erläutert. Er gestattet die Beurteilung der Dimensionswiedererlangung des PU-Schaumformkörpers nach Kompression. Die Luftdurchlässigkeit ist ein Maß für die Porosität des betreffenden PU-Schaums. Auf der Ordinate ist jeweils das Ergebnis des Rollverformungstestes aufgetragen. Auf der Abszisse ist jeweils die Luftdurchlässigkeit aufgetragen. Die Abbildungen Fig. 1 bis Fig. 3 verdeutlichen, dass der erfindungsgemäße Einsatz zumindest einer Verbindung der Formel (1a) sowie zumindest einer Verbindung der Formel (1b) bei der Herstellung von PU-Heißweichschaumstoff eine verbesserte Dimensionswiedererlangung des PU-Schaumformkörpers nach Kompression bei vergleichbarer Porosität ermöglicht.

Optional können vorteilhafterweise auch weitere übliche Additive, Aktivstoffe und Hilfsstoffe zusätzlich eingesetzt werden. Matratzen sind im Sinne dieser Erfindung ganz besonders bevorzugt. Das gilt vorteilhafterweise auch für alle folgenden bevorzugten Ausführungsformen.

Vorteilhafterweise ist der derart unter Einsatz der Verbindungen der Formel (1a) und (1b) bereitgestellte PU-Heißweichschaumstoff-Formkörper gut geeignet, um auch nach einer längeren Kompression über einen Zeitraum von mindestens 20 Stunden seine ursprüngliche Form wiedererlangen zu können.

Ein weiterer Vorteil ist, dass die betreffenden PU-Heißweichschaumstoff-Formkörper besonders emissionsarm sind mit Blick auf Emissionen von niedermolekularen linearen und zyklischen Siloxanen.

"Emissionsarm" hinsichtlich von niedermolekularen Siloxanen umfasst im Sinne der vorliegenden Erfindung insbesondere, dass der erfindungsgemäß resultierende PU-Heißweichschaumstoff eine Siloxan-Emission von $\geq 0\ \mu g/m^3$ und $\leq 500\ \mu g/m^3$, vorzugsweise $\leq 200\ \mu g/m^3$, besonders bevorzugt $\leq 100\ \mu g/m^3$, aufweist, entsprechend ermittelt nach dem Prüfkammerverfahren in Anlehnung an die DIN-Norm DIN EN ISO 16000-9:2008-04, 24 Stunden nach Prüfkammerbeladung. Diese Methode ist in der EP 3205680A1, dort in Absatz [0070], genau beschrieben, worauf hiermit Bezug genommen wird.

Ein weiterer Vorteil ist, dass die betreffenden PU-Heißweichschaumstoff-Formkörper auch Emissions-Spezifikationen wie CertiPur erfüllen können. Emissionsarm nach CertiPur heißt hierbei, dass die Gesamt- Emissionen flüchtiger organischer Substanzen (TVOC) kleiner $500\ \mu g/m^3$ ist. Nähere technische Angaben zu den Anforderungen für den CertiPUR Standard (Version 1. July 2017) finden sich unter: https://www.europur.org/images/CertiPUR_Technical_Paper_-_Full_Version_-_2017.pdf. Dieses letztgenannte Dokument (Version 1. July 2017) kann auch direkt bei der EUROPUR, Avenue de Cortenbergh 71, B-1000 Brussels, Belgium abgefordert werden.

PU-Schaumstoffe (Polyurethanschaumstoffe) und deren Herstellung sind dem Fachmann wohlbekannt und bedürfen an sich keiner weiteren Erläuterung. Formkörper im Sinne der Erfindung sind geformte Körper unterschiedlicher Gestalt. Bevorzugte Gestalten im Sinne der Erfindung sind z.B. Geometrien wie Kugeln, Quader, Zylinder usw. PU-Schaumstoff-Formkörper im Sinne der Erfindung sind demnach geformte Körper aus Polyurethanschaumstoff. Besonders bevorzugte PU-Heißweichschaumstoff-Formkörper im Sinne dieser Erfindung sind Matratzen und/oder Kissen sowie Schaumstoffblöcke im Allgemeinen.

Matratzen an sich und deren Herstellung sind bekannt. Gewöhnlich bestehen sie aus einem Matratzenkern, z.B. umfassend Schaumstoff, Latex, Naturprodukte und/oder Federkern, sowie einem die Matratze umgebenden Bezug. Für Kissen gilt entsprechendes. Matratze und/oder Kissen im Sinne dieser Anmeldung bedeutet, dass mindestens ein Abschnitt aus PU-Heißweichschaumstoff in der Matratze und/oder dem Kissen enthalten ist. Vorzugsweise bedeutet es, dass zumindest ein Teil der Matratze und/oder des Kissens aus PU-Heißweichschaumstoff besteht. Bezogen auf das Gesamtgewicht der Matratze und/oder des Kissens kann dieser Teil zumindest 1 Gew.-% oder 5 Gew.-% oder 25 Gew.-%, vorzugsweise mindestens 50 Gew.-%, insbesondere mindestens 75 Gew.- % ausmachen. Es ist auch möglich, dass die Matratze und/oder das Kissen, abgesehen vom Bezug, ganz und gar aus PU-Heißweichschaumstoff besteht.

Die Herstellung von Polyurethanschaum generell ist an sich bekannt. Er entsteht durch die bestens erprobte Umsetzung von mindestens einer Polyolkomponente und mindestens einer Isocyanatkomponente in Gegenwart von mindestens einem Treibmittel (z.B. Wasser) im Sinne einer Polyadditionsreaktion. Für die vorliegende Erfindung ist dabei wesentlich, dass es sich um einen PU-Heißweichschaumstoff handelt und diese Umsetzung in Gegenwart zumindest einer Verbindung der Formel (1a) sowie zumindest einer Verbindung der Formel (1b), wie jeweils zuvor definiert, erfolgt.

Der erfindungsgemäße Polyurethan-Schaumstoff ist ein Polyurethan-Heißweichschaumstoff, oder es wird eine Kombination dieser PU-Weichschaumstoffe verwendet, z.B. zwei dieser PU-Weichschaumstoffe. Der Begriff des PU-Heißweichschaumstoffes ist dem Fachmann an sich bekannt, es handelt sich um einen feststehenden technischen Begriff, die in der Fachwelt entsprechend etabliert ist, sei aber hier dennoch kurz erläutert.

PU-Weichschaumstoffe sind elastisch und verformbar und meistens offenzellig. Dadurch kann die Luft bei Kompression leicht entweichen. Daneben gibt es auch noch PU-Hartschaumstoffe, die unelastisch und meist geschlossenzellig sind, für Isolationszwecke eingesetzt werden und nicht im Fokus der vorliegenden Erfindung sind. Verschiedenste PU-Weichschaumstoffe existieren. So sind dem Fachmann unter anderem Esterschaumstoffe (aus Polyesterpolyolen), PU-Heißweichschaumstoffe und PU-Kaltschaumstoffe bekannt. Viskoelastische PU-Weichschaumstoffe stellen einen relativ neuen Typ dar, der zu den PU-Heißweichschaumstoffen gerechnet wird. Im Sinne der vorliegenden Erfindung sind daher viskoelastische PU-Weichschaumstoffe vom Begriff der PU-Heißweichschaumstoffe mitumfasst. Der entscheidende Unterschied zwischen einem PU-Heißweichschaum und einem PU-Kaltweichschaum besteht in den unterschiedlichen mechanischen Eigenschaften. Die Differenzierung zwischen PU-Heißweichschaumstoffen und PU-Kaltweichschaumstoffen kann insbesondere durch die Rückprallelastizität, auch "ball rebound" (BR) oder "resilience" genannt, erfolgen. Ein Verfahren zur Bestimmung der Rückprallelastizität ist beispielsweise in der DIN EN ISO 8307:2008-03 beschrieben. Hierbei wird eine Stahlkugel mit festgelegter Masse aus einer bestimmten Höhe auf den Probenkörper fallen gelassen und dann die Höhe des Rückpralls in % der Abwurfhöhe gemessen. Die betreffenden Werte für einen PU-Kaltweichschaum liegen dabei vorzugsweise im Bereich von > 50 %. PU-Kaltweichschaumstoffe werden

daher auch oft als HR-Schäume bezeichnet (engl. HR: High Resilience). Demgegenüber weisen PU-Heißweichschaumstoffe Rückprall-Werte von vorzugsweise 1 % bis maximal 50 % auf. Die erfindungsgemäßen PU-Heißweichschaumstoffe weisen daher im Rahmen einer bevorzugten Ausführungsform der Erfindung Rückprall-Werte von vorzugsweise 1 % bis maximal 50 % auf, bestimmbar nach DIN EN ISO 8307:2008-03. Ein weiteres mechanisches Kriterium stellt der SAG- oder Komfortfaktor dar. Hierbei wird eine Schaumprobe gemäß DIN EN ISO 2439 komprimiert und das Verhältnis der Druckspannung bei 65% und 25% Kompression gemessen. PU-Kaltweichschäume haben dabei einen SAG- oder Komfort-Faktor von vorzugsweise > 2,5. PU-Heißweichschäume haben einen von vorzugsweise < 2,5. Die erfindungsgemäßen PU-Heißweichschaumstoffe weisen daher im Rahmen einer bevorzugten Ausführungsform der Erfindung einen SAG- oder Komfort-Faktor von vorzugsweise < 2,5 auf, bestimmbar wir zuvor angegeben.

Eine genaue Definition der Eigenschaften kann z.B. auch dem Datenblatt "PUR-Kaltschaum" des Fachverbandes Schaumkunststoffe und Polyurethane e.V., Kennzeichen KAL20160323, Stand 23.03.2016, entnommen werden. (https://www.fsk-vsv.de/wpcontent/uploads/2017/03/Produktbeschreibunq-PUR-Kaltschaum.pdf).

Die beiden Namen PU-Heißweichschaumstoff und PU-Kaltweichschaumstoff erklären sich dabei aus der historischen Entwicklung der PU-Technologie und bedeuten nicht zwangsläufig, dass andere Temperaturen bei dem Verschäumungsprozeß auftreten.

Die unterschiedlichen mechanischen Eigenschaften von PU-Heißweichschaumstoffen und PU-Kaltweichschaumstoffen resultieren aus Unterschieden in der Formulierung zur Herstellung der Schaumstoffe. Bei einem PU-Kaltweichschaum werden gewöhnlich überwiegend hochreaktive Polyole mit primären OH-Gruppen und mittleren Molmassen > 4000 g/mol verwendet. Optional werden auch niedermolekulare Vernetzer eingesetzt, wobei die Funktion des Vernetzers auch durch höherfunktionelle Isocyanate übernommen werden kann. Dagegen werden bei PU-Heißweichschaumstoffen gewöhnlich überwiegend reaktionsträgere Polyole mit sekundären OH-Gruppen und einer mittleren Molmasse < 4000 g/mol verwendet. Bei PU-Kaltweichschaumstoffen kommt es bereits in der Expansionsphase ($CO_2$-Bildung aus -NCO und $H_2O$) des Schaums zu der Reaktion der Isocyanatgruppen mit den Hydroxylgruppen. Diese schnelle Polyurethanreaktion führt über Viskositätsanstieg gewöhnlich zu einer relativ hohen Eigenstabilität des Schaums während des Treibvorgangs. Dadurch bedingt werden andere Schaumstabilisatoren mit im Vergleich zu PU-Heißweichschaumstoffen unterschiedlichen Siloxanstrukturen benötigt, weshalb die vorliegende Erfindung sich nicht auf PU-Kaltweichschaumstoffe erstreckt. Bei PU-Kaltweichschaumstoffen handelt es sich gewöhnlich um hochelastische Schaumstoffe. Aufgrund der hohen Eigenstabilität sind die Zellen am Ende des Schäumvorgangs in der Regel nicht genügend geöffnet und die Zellstruktur muss noch mechanisch aufgedrückt werden. Bei PU-Heißweichschaumstoffen ist dies dagegen im Normalfall nicht nötig. Eine wesentlich stärkere Stabilisierung durch hochmolekulare Polyethersiloxan-Strukturen ist hier wichtig. Entsprechend hochaktive Stabilisatoren sind durch Formel (1a) definiert. Bei erfindungsgemäßen PU-Heißweichschaumstoffen wird neben einem Stabilisator gemäß Formel (1a) bei der Herstellung zusätzlich noch eine Silikonverbindung der Formel (1b) verwendet.

Offenzellige PU-Heißweichschaumstoffe weisen vorzugsweise eine Gasdurchlässigkeit (auch "Porosität" genannt) in einem Bereich von 1 bis 6,5 scfm auf. Gemessen wird diese durch Anlegen einer Druckdifferenz und Messung des durchströmenden Luftvolumens gemäß ASTM D 3574 (2011-00). Die Methode wird im Beispielteil (siehe dort: Porosität bestimmt durch die Durchflussmethode) genau erläutert. Scfm (standard cubic feet per minute) steht für Standard Kubikfuß pro Minute gemessen unter Standardbedingungen (23°C, 100 kPa).

PU-Heißweichschaumstoffe besitzen je nach Anwendung vorzugsweise ein Raumgewicht zwischen 8 und 80 $kg/m^3$. Hierbei wird insbesondere bei der Verwendung solcher PU-Heißweichschaumstoffe als Matratzen, Matratzenbestandteile und/oder Kissen nach regionalen Bedürfnissen, Anforderungen und Vorlieben der Verbraucher unterschieden. Der bevorzugte PU-Heißweichschaumstoff für Matratzenanwendungen hat dabei ein Raumgewicht von vorzugsweise 25 - 30 $kg/m^3$.

Eine spezielle Klasse der PU-Heißweichschaumstoffe sind die viskoelastischen PU-Schaumstoffe. Diese sind auch unter dem Namen Memory Foam (zu Deutsch etwa "Schaum mit Erinnerungsvermögen") bekannt und zeichnen sich sowohl durch eine geringe Rückprallelastizität (vorzugsweise < 10%) als auch durch eine langsame, graduelle Rückverformung nach einer erfolgten Kompression aus (Rückverformungszeit vorzugsweise 2 - 10 s). Solche Materialien sind im Stand der Technik wohlbekannt und werden insbesondere auch wegen ihrer energie- und schallabsorbierenden Eigenschaften sehr geschätzt. Typische viskoelastische Weichschaumstoffe haben gewöhnlich eine geringere Porosität und eine hohe Dichte (bzw. ein hohes Raumgewicht (RG)) verglichen mit anderen PU-Heißweichschaumstoffen. Kissen liegen mit einem Raumgewicht von vorzugsweise 30 - 50 $kg/m^3$ am unteren Ende der für viskoelastische Schaumstoffe typischen Dichteskala, wohingegen viskoelastische PU-Schaumstoffe für Matratzen vorzugsweise eine Dichte im Bereich von 50 - 130 $kg/m^3$ aufweisen.

In PU-Heißweichschaumstoffen orientieren sich die harten (hohe Glasübergangstemperatur) und weichen (geringe Glasübergangstemperatur) Segmente während der Reaktion zueinander und trennen sich anschließend spontan, um voneinander morphologisch verschiedene Phasen innerhalb des "Bulkpolymers" auszubilden. Bei solchen Materialien spricht man auch von "phasenseparierten" Materialien. Die Glastemperatur liegt bei viskoelastischen Schaumstoffen vorzugsweise zwischen - 20 und +15 °C. Die Glasübergangstemperatur von anderen PU-Heißweichschaumstoffen und PU-Kaltweichschaumstoffen dagegen gewöhnlich bei unter -35°C. Von solcher "Struktur-Viskoelastizität" bei offenzelligen viskoelastischen PU-Heißweichschaumstoffen, die im Wesentlichen auf der Glastemperatur des Polymers beruht, ist ein pneumatischer Effekt zu unterscheiden. In letzterem Falle handelt es sich um eine relativ geschlossene Zellstruktur (geringe Porosität). Durch die geringe Luftdurchlässigkeit strömt die Luft nach einer Kompression nur langsam wieder ein, was eine verlangsamte Rückverformung zur Folge hat.

Hinsichtlich der eingesetzten Schaumstabilisatoren werden für viskoelastische PU-Schaumstoffe im Rahmen der Erfindung Verbindungen der Formel (1a) eingesetzt. Durch Zugabe der Verbindung mit der Formel (1b) erfolgt insbesondere eine Verbesserung der Rollkompressionseigenschaften, die erfindungsgemäß ist. Wenn im folgenden PU-Heißweichschaumstoffe beschrieben sind, sind - auch falls nicht separat erwähnt- viskoelastische PU-Weichschaumstoffe inbegriffen.

Verschiedene PU-Heißweichschaumstoffe werden neben dem Raumgewicht oft nach ihrer Stauchhärte, auch Tragfähigkeit genannt, für bestimmte Anwendungen eingestuft. So liegt die Stauchhärte CLD (Compression Load Deflection), 40 % nach DIN EN ISO 3386-1:2015-10 für PU-Heißweichschaumstoffe vorzugsweise im Bereich von 2,0 - 8,0 kPa, viskoelastische Polyurethanschaumstoffe haben vorzugsweise Werte von 0,1 - 5,0 kPa, insbesondere 0,5 - 2,5 kPa.

Gemäß einer bevorzugten Ausführungsform der Erfindung weisen die erfindungsgemäß einzusetzenden PU-Heißweichschaumstoffe folgende bevorzugte Eigenschaften hinsichtlich Rückprallelastizität, Raumgewicht und/oder Porosität auf, nämlich eine Rückprallelastizität von 1 bis 50 %, gemessen nach DIN EN ISO 8307:2008-03, und/oder ein Raumgewicht von 5 bis 150 kg/$m^3$ und/oder eine Porosität von 1 bis 6 scfm, insbesondere 1,5 bis 4,5 scfm, besonders bevorzugt 1,75 bis 4,25 scfm. Besonders bevorzugt sind alle 3 Kriterien bezüglich Rückprallelastizität, Raumgewicht und/oder Porosität, wie eben beziffert, erfüllt. Insbesondere weist der erfindungsgemäß eingesetzte PU-Heißweichschaumstoff eine Stauchhärte CLD, 40 % nach DIN EN ISO 3386-1:2015-10 von 0,1 bis 8,0 kPa auf.

PU-Heißweichschaumstoffe sowie deren Herstellung sind an sich bekannt. PU-Heißweichschaumstoff zeichnet sich im Sinne dieser Erfindung im Rahmen einer bevorzugten Ausführungsform insbesondere dadurch aus, dass er eine Stauchhärte CLD, 40 % nach DIN EN ISO 3386-1:2015-10 von 2,0 - 8,0 kPa, und/oder eine Rückprallelastizität von 1 - 50 %, gemessen nach DIN EN ISO 8307:2008-03, und/oder ein Raumgewicht von 8 bis 80 kg/$m^3$ und/oder eine Porosität von 1 bis 6 scfm, insbesondere 1,5 bis 4,5 scfm, besonders bevorzugt 1,75 bis 4,25 scfm hat. Eine Möglichkeit der Herstellung wird z.B. in EP 2 481 770 A2 oder EP 2 182 020 A1 beschrieben. Viskoelastischer PU-Weichschaumstoff zeichnet sich im Sinne dieser Erfindung im Rahmen einer bevorzugten Ausführungsform insbesondere dadurch aus, dass er eine Glasübergangstemperatur zwischen -20 und +15 °C und/oder eine Stauchhärte CLD, 40 % nach DIN EN ISO 3386-1:2015-10 von 0,1 - 5,0 kPa, insbesondere 0,5 - 2,5 kPa, und/oder eine Rückprallelastizität von < 10 %, gemessen nach DIN EN ISO 8307:2008-03, und/oder ein Raumgewicht von 30 bis 130 kg/$m^3$ und/oder eine Porosität (nach Aufdrücken des Schaumes) von 1 bis 6 scfm, insbesondere 1,5 bis 4,5 scfm, besonders bevorzugt 1,75 bis 4,25 scfm hat. Eine Möglichkeit der Herstellung wird z.B. in WO 2013/131710 A2 beschrieben. Gemessen werden kann die Glasübergangstemperatur dabei mittels Dynamisch Mechanischer Analyse (DMA) (DIN 53513:1990-03) oder mittels Differentieller Kalorimetrie (DSC) (ISO 11357-2:2013). Dabei handelt es sich genau genommen um einen Glasübergangsbereich, der sich über einen Temperaturbereich erstreckt. Angegebene Werte stellen daher Mittelwerte dar.

Der erfindungsgemäße PU-Heißweichschaumstoff-Formkörper, insbesondere die erfindungsgemäße Matratze, weist im Rahmen einer bevorzugten Ausführungsform der Erfindung eine Höhe von mindestens 1 cm bis maximal 50 cm, sowie eine Breite von mindestens 20 cm bis maximal 300 cm auf, sowie eine Länge von mindestens 20 cm bis maximal 300 cm. Bevorzugte Maße sind z.B. Höhen im Bereich von 5 cm bis 40 cm, Breiten im Bereich von 70 cm bis 200 cm, Längen im Bereich von 150 cm bis 220 cm. Der erfindungsgemäße PU-Schaumstoff-Formkörper, insbesondere das erfindungsgemäße Kissen, kann im Rahmen einer bevorzugten Ausführungsform der Erfindung auch eine Höhe von mindestens 1 cm bis maximal 40 cm, sowie eine Breite von mindestens 15 cm bis maximal 200 cm auf, sowie eine Länge von mindestens 15 cm bis maximal 200 cm aufweisen, wobei bevorzugte Maße z.B. Höhen im Bereich von 2 cm bis 30 cm, Breiten im Bereich von 15 cm bis 50 cm, Längen im Bereich von 15 cm bis 50 cm sind.

Gemäß einer weiteren bevorzugten Ausführungsform der Erfindung ist der PU-Heißweichschaumstoff-Formkörper eine Matratze und ist vorzugsweise als Mehrzonen-Matratze ausgebildet. Die unterschiedlichen Zonen unterscheiden sich dabei insbesondere durch die jeweilige Härte. Solche Mehrzonen-Matratzen und deren Herstellung sind an sich bekannt. Sie werden breit kommerziell vertrieben. Insbesondere weist die Matratze bis zu sieben Zonen unterschiedlicher Härte auf, die sich über die Matratzenlängsrichtung erstrecken und in der entsprechenden Breite ausgeführt sind. Wenn die Matratze über ihre Fläche verteilt verschiedene Härtezonen aufweist, die insbesondere durch Einschnitte und/oder Hohlräume in der Matratze gebildet sind, so liegt eine weitere bevorzugte Ausführungsform der Erfindung vor.

Nach einer weiteren bevorzugten Ausführungsform der Erfindung kann es sich bei dem PU-Heißweichschaumstoff-Formkörper auch um eine PU-Kaltschaummatratze, eine viskoelastische PU-Weichschaum-Matratze, eine PU-Heißweichschaummatratze, eine PU-Gelschaum-Matratze, eine Latexmatratze oder eine Boxspring-Matratze, jeweils enthaltend mindestens ein Teil aus einem erfindungsgemäßen PU-Heißweichschaumstoff, handeln. Diese Matratzentypen sind an sich dem Fachmann bekannt und werden unter diesen Bezeichnungen auch weltweit vermarktet. Matratzen

nur aus PU-Heißweichschaumstoff werden am Markt gewöhnlich vereinfacht als Schaumstoffmatratzen bezeichnet. Der erfindungsgemäße Begriff der Matratze umfasst im Sinne dieser Erfindung auch entsprechende Matratzenauflagen und -unterlagen.

Gemäß einer bevorzugten Ausführungsform der Erfindung zeichnet sich der PU-Heißweichschaumstoff-Formkörper, vorzugsweise die Matratze, dadurch aus, dass der PU-Heißweichschaumstoff-Formkörper, bezogen auf sein Ausgangsvolumen um mindestens 20%, vorzugsweise mindestens 30%, insbesondere mindestens 40% komprimiert wurde und von einem Hilfsmittel, insbesondere Verpackungsmittel, für mindestens 20 Stunden in komprimierter Form gehalten wird.

Geeignete Hilfsmittel, insbesondere Verpackungsmittel sind Beutel und/oder Folien, wie sie z.B. aus dem Bereich der Rollmatratzen bekannt sind. Die Beutel und/oder Folien können durch beliebige Mittel, wie durch einen Clip, oder durch ein Klebeband oder durch Verschweißen verschlossen werden. Die Funktion der Hilfsmittel liegt darin, die komprimierte Form solange erhalten zu können, bis der Abnehmer des PU-Heißweichschaumstoff-Formkörpers diesen wieder normal nutzen möchte. Nach Entfernen des Hilfsmittel, insbesondere Verpackungsmittels, dehnt sich der komprimierte Formkörper wieder aus und erlangt im optimalen Fall die ursprüngliche Form und Größe zurück. Die vorliegende Erfindung ermöglicht es, dass eine verbesserte Dimensionswiedererlangung nach Kompression über einen Zeitraum von mindestens 20 Stunden ermöglicht wird.

Gemäß einer weiteren bevorzugten Ausführungsform liegt der PU-Heißweichschaumstoff-Formkörper komprimiert und vakuumiert vor, und insbesondere handelt es sich um eine Rollmatratze, die vakuumiert und komprimiert vorliegt.

Die Bereitstellung der diversen im Rahmen dieser Erfindung einsetzbaren PU-Heißweichschaumstoffe ist an sich bekannt und es kann auf alle bewährten Verfahren zurückgegriffen werden, mit der Besonderheit, dass die PU-Heißweichschaumstoff-Herstellung in Gegenwart zumindest einer Verbindung der Formel (1a) sowie zumindest einer Verbindung der Formel (1b) erfolgt.

Die Herstellung entsprechender PU-Heißweichschaumstoffe bedarf an sich keiner weiteren Erläuterung mehr, dennoch werden im Folgenden einige bevorzugte Details zur Herstellung des erfindungsgemäß eingesetzten PU-Schaums genannt. Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Werden nachfolgend Parameter angegeben, die durch Messung bestimmt wurden, so wurden die Messungen, wenn nicht anders angegeben, bei einer Temperatur von 23 °C und einem Druck von 100 kPa durchgeführt. Wenn nicht anders angegeben, bedeutet Kompression des Schaumstoffs im Sinne dieser Erfindung, dass der Schaumstoff vorzugsweise um mindestens 20%, bezogen auf sein Ausgangsvolumen, komprimiert wird, insbesondere über einen Zeitraum von mindestens 20 Stunden.

Als Polyurethane werden hier alle Reaktionsprodukte ausgehend von Isocyanaten, insbesondere von Polyisocyanaten, und entsprechend isocyanat-reaktiven Molekülen verstanden. Dies umfasst unter anderem auch Polyisocyanurate, Polyharnstoffe sowie Allophanat-, Biuret-, Uretdion-, Uretimin- oder Carbodiimid-enthaltende Isocyanat- oder Polyisocyanat-Reaktionsprodukte. Es versteht sich von selbst, dass der Fachmann zur Herstellung der unterschiedlichen Polyurethanweichschaumstoffe, beispielsweise von PU-Heißweichschaumstoffen, die hierfür jeweils notwendigen Substanzen, wie Isocyanate, Polyole, Stabilisatoren, Tenside, etc. entsprechend auswählt, um den jeweils gewünschten Polyurethan-Typ, insbesondere Polyurethanschaum-Typ, zu erhalten. Weitere Angaben zu den einsetzbaren Ausgangsstoffen, Katalysatoren sowie Hilfs- und Zusatzstoffen finden sich beispielsweise im Kunststoffhandbuch, Band 7, Polyurethane, Carl-Hanser-Verlag München, 1. Auflage 1966, 2. Auflage, 1983 und 3. Auflage, 1993. Die nachstehenden Verbindungen, Komponenten und Zusatzstoffe sind lediglich beispielhaft genannt und können durch andere dem Fachmann bekannte Stoffe ersetzt und/oder ergänzt werden.

Als Isocyanatkomponenten werden vorzugsweise ein oder mehrere organische Polyisocyanate mit zwei oder mehr Isocyanat-Funktionen eingesetzt. Als Polyolkomponenten werden vorzugsweise ein oder mehrere Polyole mit zwei oder mehr gegenüber Isocyanat reaktiven Gruppen, eingesetzt.

Als Isocyanatkomponenten geeignete Isocyanate im Sinne dieser Erfindung sind alle Isocyanate, die mindestens zwei Isocyanat-Gruppen enthalten. Generell können alle an sich bekannten aliphatischen, cycloaliphatischen, arylaliphatischen und vorzugsweise aromatischen mehrfunktionalen Isocyanate verwendet werden. Bevorzugt werden Isocyanate in einem Bereich von 60 bis 350 mol%, besonders bevorzugt in einem Bereich von 60 bis 140 mol%, relativ zu der Summe der isocyanatverbrauchenden Komponenten eingesetzt.

Beispielhaft genannt werden können hier Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4, und vorzugsweise Hexamethylendiisocyanat-1,6 (HMDI), cycloaliphatische Diisocyanate, wie Cyclohexan-1,3- und 1-4-diisocyanat sowie beliebige Gemische dieser Isomeren, 1-Isocyanato-3,3,5-trimethyl-5-isocyanatomethylcyclohexan (Isophorondiisocyanat oder kurz IPDI), 2,4- und 2,6-Hexa-hydrotoluylendiisocyanat sowie die entsprechenden Isomerengemische, und vorzugsweise aromatische Di- und Polyisocyanate, wie beispielsweise 2,4- und 2,6-Toluoldiisocyanat (TDI) und die entsprechenden Isomerengemische, Mischungen aus 2,4'- und 2,2'-Diphenylmethandiisocyanaten (MDI) und Polyphenylpolymethylenpolyisocyanate (Roh-MDI) und Mischungen aus Roh-MDI und Toluoldiisocyanaten (TDI). Die organischen Di- und Polyisocyanate können einzeln oder in Form ihrer Mischungen eingesetzt werden.

Es ist auch möglich, Isocyanate einzusetzen, die durch den Einbau von Urethan-, Uretdion-, Isocyanurat-, Allophanat- und anderen Gruppen modifiziert wurden, sogenannte modifizierte Isocyanate.

Besonders geeignete organische Polyisocyanate und daher besonders bevorzugt angewendet werden verschiedene Isomere des Toluoldiisocyanat (2,4- und 2,6-Toluoldiisocyanat (TDI), in reiner Form oder als Isomerengemische unterschiedlicher Zusammensetzung), 4,4'-Diphenylmethandiisocyanat (MDI), das so genannte "crude MDI" oder "polymere MDI" (enthält neben dem 4,4'- auch die 2,4'- und 2,2'-Isomeren des MDI und höherkernige Produkte) sowie das als "pure MDI" bezeichnete zweikernige Produkt aus überwiegend 2,4'- und 4,4'-Isomerengemischen bzw. deren Prepolymeren. Beispiele für besonders geeignete Isocyanate sind beispielsweise in EP 1712578, EP 1161474, WO 00/58383, US 2007/0072951, EP 1678232 und der WO 2005/085310 aufgeführt, auf die hier in vollem Umfang Bezug genommen wird.

Als Polyolkomponente geeignete Polyole im Sinne der vorliegenden Erfindung sind alle organischen Substanzen mit mehreren gegenüber Isocyanaten reaktiven Gruppen, vorzugsweise OH-Gruppen, sowie deren Zubereitungen. Bevorzugte Polyole sind alle zur Herstellung von Polyurethan-Systemen, insbesondere Polyurethan-Schaumstoffen; üblicherweise verwendeten Polyetherpolyole und/oder hydroxyl-gruppenhaltigen aliphatischen Polycarbonate, insbesondere Polyetherpolycarbonatpolyole und/oder Füllkörperpolyole (Polymerpolyole) wie SAN-, PHD- und PIPA-Polyole, die sich dadurch auszeichnen, dass sie feste organische Füllstoffe bis zu einem Feststoffgehalt von 40 % oder mehr in disperser Verteilung enthalten, und/oder autokatalytische Polyole, die katalytisch aktive funktionelle Gruppen, insbesondere Amino-Gruppen, enthalten, und/oder Polyole natürlicher Herkunft, sogenannte "natural oil based polyols" (NOPs). Vorzugsweise besitzen die Polyole für PU-Heißweichschaumstoff eine Funktionalität von 1,8 bis 8 und zahlengemittelte Molekulargewichte im Bereich von 500 bis 4000 g/mol. Üblicherweise kommen die Polyole mit OH-Zahlen im Bereich von 25 bis 400 mg KOH/g zum Einsatz. Die zahlengemittelten Molekulargewichte werden üblicherweise durch Gelpermeationschromatographie (GPC), insbesondere mit Polypropylenglycol als Referenzsubstanz und Tetrahydrofuran (THF) als Elutionsmittel, bestimmt. Die OH-Zahlen können insbesondere nach der DIN-Norm DIN 53240:1971-12 bestimmt werden. Je nach den geforderten Eigenschaften der resultierenden Schäume können entsprechende Polyole verwendet werden, wie sie beispielsweise beschrieben werden in: US 2007/0072951 A1, WO 2007/111828, US 2007/0238800, US 6359022 oder WO 96/12759. Weitere Polyole sind dem Fachmann bekannt und können zum Beispiel der EP-A-0380993 oder US-A-3346557 entnommen werden.

Gemäß einer bevorzugten Ausführungsform der Erfindung, insbesondere zur Herstellung von Blockweichschaumstoffen, werden Polyetheralkohole eingesetzt, die sekundäre Hydroxylgruppen, bevorzugt über 50 %, besonders bevorzugt über 90 %, aufweisen, insbesondere solche mit einem Propylenoxidblock oder statistischen Propylen- und Ethylenoxidblock am Kettenende oder solche, die nur auf Propylenoxidblöcken basieren. Solche Polyetheralkohole besitzen vorzugsweise eine Funktionalität von 2 bis 8, besonders bevorzugt 2 bis 4, zahlengemittelte Molekulargewichte im Bereich von 500 bis 4000 g/mol, vorzugsweise 800 bis 4000 g/mol, besonders bevorzugt 2500 bis 4000 g/mol und üblicherweise OH-Zahlen im Bereich von 20 bis 100 mg KOH/g, vorzugsweise 40 bis 60 mg KOH/g.

Gemäß einer weiteren bevorzugten Ausführungsform der Erfindung, werden zusätzlich auch zwei- und/oder dreifunktionelle Polyetheralkohole eingesetzt, die primäre Hydroxylgruppen, bevorzugt über 50 %, besonders bevorzugt über 80 %, aufweisen, insbesondere solche mit einem Ethylenoxidblock am Kettenende. Polyole für PU-Kaltweichschaumstoffe ("HR-Polyole") gehören in diese Kategorie, falls gleichzeitig die Molmasse > 4000 g/mol ist. Je nach den geforderten Eigenschaften dieser erfindungsgemäß bevorzugten Ausführungsform, insbesondere zur Herstellung der oben genannten PU-Heißweichschaumstoffe, werden neben den hier beschriebenen Polyetheralkoholen vorzugsweise weitere Polyetheralkohole eingesetzt, die primäre Hydroxylgruppen tragen und überwiegend auf Ethylenoxid basieren, insbesondere mit einem Anteil an Ethylenoxidblöcken von > 70 %, bevorzugt > 90 % ("Hypersoft-Polyol"). Alle im Sinne dieser bevorzugten Ausführungsform beschriebenen Polyetheralkohole besitzen vorzugsweise eine Funktionalität von 2 bis 8, besonders bevorzugt 2 bis 5, zahlengemittelte Molekulargewichte im Bereich von 500 bis 8000 g/mol, bevorzugt 500 bis 7000 g/mol und üblicherweise OH-Zahlen im Bereich von 10 bis 100 mg KOH/g, vorzugsweise 20 bis 60 mg KOH/g. Dabei werden Polyole mit primären OH-Funktionen bei den erfindungsgemäßen PU-Heißweichschaumstoffen gemäß bevorzugter Ausführungsform nicht allein, sondern in Kombination mit Polyolen mit sekundären OH-Gruppen eingesetzt. Dabei werden Polyole mit primären OH-Funktionen in der Kombination gemäß bevorzugter Ausführungsform nur zu < 50

% verwendet.

Gemäß einer weiteren bevorzugten Ausführungsform der Erfindung, werden autokatalytische Polyole eingesetzt.

Gemäß einer weiteren bevorzugten Ausführungsform der Erfindung, insbesondere zur Herstellung von viskoelastischen PU-Weichschaumstoffen, werden vorzugsweise Gemische verschiedener, bevorzugt zweier oder dreier, mehrfunktioneller Polyetheralkohole eingesetzt. Üblicherweise bestehen hier die eingesetzten Polyol-Kombinationen aus einem niedermolekularen "Crosslinker"-Polyol mit hoher Funktionalität, vorzugsweise mit einer OH-Zahl von 100 bis 400 mg KOH/g, und/oder einem konventionellen hochmolekularen Blockweichschaum- oder HR-Polyol und/oder einem "Hypersoft"-Polyetherpolyol, vorzugsweise mit einer OH-Zahl von 20 bis 40 mg KOH/g, mit hohem Anteil an Ethylenoxid und mit zellöffnenden Eigenschaften. Falls in der viskoelastischen Schaumformulierung auch HR-Polyole eingesetzt werden, so ist ihr Massenanteil an der Polyolmischung < 50%.

Gemäß einer weiteren bevorzugten Ausführungsform der Erfindung, werden Recycling-Polyole eingesetzt.

Ein PU-Heißweichschaumstoff-Formkörper, der unter Mitverwendung von Recycling-Polyolen erhalten wurde, entspricht demgemäß einer bevorzugten Ausführungsform der Erfindung. Der Einsatz von Recycling-Polyolen führt normalerweise zu Problemen mit dem Wiedererlangen der Form nach Rollkompression. Im Rahmen der vorliegenden Erfindung konnte überraschenderweise gefunden werden, dass der kombinierte Einsatz zumindest einer Verbindung der Formel (1a) sowie zumindest einer Verbindung der Formel (1b), wie zuvor detailliert erläutert, die Behebung dieses Problems ermöglicht.

Bei Recycling-Polyolen handelt es sich um Polyole, die aus PU-Schaum-Abfall gewonnen werden. Dabei kann es sich um Produktionsabfall aus der PU-Heißweichschaum-Produktion oder aus PU-Heißweichschaumabfall nach der Nutzung durch den Konsumenten (z.B. alte Matratzen) handeln. In beiden Fällen wird der PU-Schaumstoff durch chemische Prozesse verflüssigt. Hierbei kommen verschiedene Prozesse wie zum Beispiel Glykolyse, Hydrolyse oder Acidolyse in Betracht. Das erhaltene flüssige Recyclingpolyol kann dann erneut zur Herstellung von PU-Heißweichschaum eingesetzt werden. Allerdings zeichnen sich solche PU-Heißweichschaumstoffe oft durch deutlich nachteilige mechanische Eigenschaften, wie der Beständigkeit gegen Rollkompression, aus. Nähere Informationen zu der Verwendung von Recyclingpolyolen in PU-Heißweichschaumstoffen können unter anderem dem nachfolgenden Forschungsbericht des BMBF entnommen werden: https:/www.cleaner-production.de/fileadmin/assets/bilder/BMBF-Projekte/01RI05070-075 - Abschlussbericht.pdf.

Die Mitverwendung von Recycling-Polyolen im Rahmen der Erfindung entspricht für alle beanspruchten Gegenstände jeweils einer bevorzugten Ausführungsform der Erfindung.

Ein bevorzugtes Verhältnis von Isocyanat und Polyol, ausgedrückt als Index der Formulierung, d.h. als stöchiometrisches Verhältnis von Isocyanat-Gruppen zu gegenüber Isocyanat reaktiven Gruppen (z.B. OH-Gruppen, NH-Gruppen) multipliziert mit 100, liegt im Bereich von 50 bis 140, bevorzugt 70 bis 130, besonders bevorzugt 85 bis 125. Ein Index von 100 steht für ein molares Verhältnis der reaktiven Gruppen von 1 zu 1.

Zur Herstellung der erfindungsgemäßen PU-Heißweichschaumstoffe können auch Katalysatoren eingesetzt werden. Der Ausdruck Katalysatoren umfasst im Sinne dieser Erfindung alle Verbindungen nach dem Stand der Technik, die in der Lage sind Isocyanat-Reaktionen zu katalysieren und/oder bei der Herstellung von Polyisocyanat-Reaktionsprodukten, insbesondere von Polyurethanschaumstoffen, als Katalysatoren, Co-Katalysatoren oder Aktivatoren eingesetzt werden.

Geeignete Katalysatoren sind bekannt, es handelt sich insbesondere um Substanzen, die die Gelreaktion (Isocyanat-Polyol), die Treibreaktion (Isocyanat-Wasser) und/oder die Di- bzw. Trimerisierung des Isocyanats katalysieren. Solche Katalysatoren sind vorzugsweise stickstoffhaltige Verbindungen, insbesondere Amine und Ammonium-Salze, und/oder metallhaltige Verbindungen.

Beispiele für geeignete stickstoffhaltige Verbindungen als Katalysatoren im Sinne der vorliegenden Erfindung sind die Amine Triethylamin, Triethanolamin, Diethanolamin, N,N-Dimethylcyclohexylamin, N,N-Dicyclohexylmethylamin, N,N-Dimethylaminoethylamin, N,N,N',N'-Tetramethylethan-1,2-diamin, N,N,N',N'-Tetramethylpropan-1,3-diamin, N,N,N',N'-Tetramethylbutan-1,4-diamin, N,N,N',N'-Tetramethylhexan-1,6-diamin, N-[2-(Dimethylamino)ethyl]-N,N',N'-trimethyl-1,2-ethandiamin, 2-[(2-(Dimethylamino)ethyl)methylamino]ethanol, N',N'-Dimethylpropan-1,3-diamin, N',N'-Diethyl-propan-1,3-diamin, 1-(2-Aminoethyl)pyrrolidin, 1-(3-Aminopropyl)pyrrolidin, 1-[3-(Dimethylamino)-propyl-(2-hydroxypropyl)amino]propan-2-ol, 2-[[3-(Dimethylamino)propyl]methylamino]ethanol, 3-(2-Dimethylamino)ethoxy)propylamin, N-[3-(Dimethylamino)propyl]-N',N'-dimethylpropan-1,3-diamin, N'-[3-(Dimethylamino)propyl]-N,N,N'-trimethylpropan-1,3-diamin, 1-[Bis[3-(dimethylamino)propyl]amino]-2-propanol, N,N-Bis[3-(dimethylamino)propyl]-N',N'-dimethylpropan-1,3-diamin, 1,4-Diazabicyclo[2.2.2]octan, 1,4-Diazabicyclo[2.2.2]octan-2-methanol, 1,2-Dimethylimidazol, N-(2-Hydroxypropyl)imidazol, 2-Methyl-1-(2-methylpropyl)imidazol, N-(3-Aminopropyl)imidazol, N-Methylimidazol, 1-(3-Aminopropyl)-2-methyl-1H-imidazol, N-Ethylmorpholin, N-Methylmorpholin, 2,2,4-Trimethyl-2-silamorpholin, N-Ethyl-2,2-dimethyl-2-silamorpholin, N-(2-Aminoethyl)morpholin, N-(2-Hydroxyethyl)morpholin, 2,2'-Dimorpholinodiethylether, N,N'-Dimethylpiperazin, N-(2-Hydroxyethyl)piperazin, N-(2-Aminoethyl)piperazin, N,N-Dimethylbenzylamin, N,N-(Dimethylamino)ethanol, N,N-(Diethyl-amino)ethanol, 1-(2-Hydroxyethyl)pyrrolidin, 3-Dimethylamino-1-propanol,

1-(3-Hydroxypropyl)-pyrrolidin, 2-[2-(Dimethylamino)ethoxy]ethanol, 2-[2-(Diethylamino)ethoxy]ethanol, Bis(2-Dimethylaminoethyl)ether, 2-[[2-(2-(Dimethylamino)ethoxy)ethyl]methylamino]ethanol, N-[2-[2-(Dimethylamino)ethoxy]ethyl]-N-methyl-1,3-propandiamin, 1,3,5-Tris[3-(dimethylamino)propyl]hexahydro-1,3,5-triazin, 1,8-Diazabicyclo[5.4.0]undec-7-en, 1,5-Diazabicyclo[4.3.0]non-5-en, 1,5,7-Triazabicyclo[4.4.0]dec-5-en, N-Methyl-1,5,7-triazabicyclo[4.4.0]dec-5-en, 1,4,6-Triazabicyclo[3.3.0]oct-4-en, 1,1,3,3-Tetramethylguanidin, 2-tert-Butyl-1,1,3,3-tetramethylguanidin, Guanidin, 1,1'-[(3-{bis[3-(dimethylamino)-propyl]amino}propyl)imino]dipropan-2-ol, (3-Aminopropyl)bis[3-(dimethylamino)propyl]amin, 3-(Dimethylamino)propylharnstoff, 1,3-Bis[3-(dimethylamino)propyl]harnstoff, 3-Dimethylamino-N,N-dimethylpropanamid, 6-(Dimethylamino)hexan-1-ol und 2,4,6-Tris[(dimethylamino)methyl]phenol.

Derartige Katalysatoren und/oder Mischungen werden beispielsweise unter dem Namen Jeffcat® ZF-10, Lupragen® DMEA, Lupragen® API, Toyocat® RX 20 und Toyocat® RX 21 , DABCO® RP 202, DABCO® RP 204, DABCO® NE 300, DABCO® NE 310, DABCO® NE 400, DABCO® NE 500, DABCO® NE 600, DABCO® NE 650, DABCO® NE 660, DABCO® NE 740, DABCO® NE 750, DABCO® NE 1060, DABCO® NE 1080, DABCO® NE 1082 und DABCO® NE 2039, Niax® EF 860, Niax® EF 890, Niax® EF 700, Niax® EF 705, Niax® EF 708, Niax® EF 600, Niax® EF 602, Kosmos® 54, Kosmos® EF, und Tegoamin® ZE 1 im Handel angeboten.

Geeignete metallhaltige Verbindungen als Katalysatoren können zum Beispiel ausgewählt werden aus der Gruppe der metallorganischen oder organometallischen Verbindungen, metallorganischen oder organometallischen Salze, organischen Metallsalze, anorganischen Metallsalze sowie aus der Gruppe der geladenen oder ungeladenen metallhaltigen Koordinationsverbindungen, insbesondere der Metall-Chelat-Komplexe. Der Ausdruck "metallorganische oder organometallische Verbindungen" umfasst im Sinne dieser Erfindung insbesondere den Einsatz metallhaltiger Verbindungen, die über eine direkte Kohlenstoff-Metall-Bindung verfügen, hier auch als Metallorganyle (z.B. Zinnorganyle) oder organometallische bzw. Organometall-Verbindungen (z.B. Organozinn-Verbindungen) bezeichnet. Der Ausdruck "organometallische oder metallorganische Salze" umfasst im Sinne dieser Erfindung insbesondere den Einsatz von metallorganischen oder organometallischen Verbindungen mit Salzcharakter, das heißt Ionenverbindungen, bei denen entweder das Anion oder Kation von metallorganischer Natur ist (z.B. Organozinn-Oxide,

Organozinn-Chloride oder Organozinn-Carboxylate). Der Ausdruck "organische Metallsalze" umfasst im Sinne dieser Erfindung insbesondere den Einsatz von metallhaltigen Verbindungen, die über keine direkte Kohlenstoff-Metall-Bindung verfügen und gleichzeitig Metallsalze sind, bei denen entweder das Anion oder das Kation eine organische Verbindung ist (z.B. Zinn(II)-Carboxylate). Der Ausdruck "anorganische Metallsalze" umfasst im Sinne dieser Erfindung insbesondere den Einsatz von metallhaltigen Verbindungen oder von Metallsalzen, bei denen weder Anion noch Kation eine organische Verbindung ist, z.B. Metall-Chloride (z.B. Zinn(II)-Chlorid), reine oder gemischte, also mehrere Metalle enthaltende, Metall-Oxide (z.B. Zinn-Oxide) und/oder Metall-Silicate oder - Alumosilicate. Der Ausdruck "Koordinationsverbindung" umfasst im Sinne dieser Erfindung insbesondere den Einsatz von metallhaltigen Verbindungen, die aus einem oder mehreren Zentralteilchen und einem oder mehreren Liganden aufgebaut sind, wobei die Zentralteilchen geladene oder ungeladene Metalle sind (z.B. Metall- bzw. Zinn-Amin-Komplexe). Der Ausdruck "Metall-Chelat-Komplexe" umfasst im Sinne dieser Erfindung insbesondere den Einsatz von metallhaltigen Koordinationsverbindungen, die Liganden mit mindestens zwei Koordinations- oder Bindungsstellen zum Metallzentrum aufweisen (z.B. Metall- bzw. Zinn-Polyamin- oder Metall- bzw. Zinn-Polyether-Komplexe). Geeignete metallhaltige Verbindungen, insbesondere wie oben definiert, als Katalysatoren im Sinne der vorliegenden Erfindung können zum Beispiel ausgewählt werden aus allen metallhaltigen Verbindungen enthaltend Lithium, Natrium, Kalium, Magnesium, Calcium, Scandium, Yttrium, Titan, Zirconium, Vanadium, Niob, Chrom, Molybdän, Wolfram, Mangan, Cobalt, Nickel, Kupfer, Zink, Quecksilber, Aluminium, Gallium, Indium, Germanium, Zinn, Blei, und/oder Bismuth, insbesondere Natrium, Kalium, Magnesium, Calcium, Titan, Zirconium, Molybdän, Wolfram, Zink, Aluminium, Zinn und/oder Bismuth, besonders bevorzugt Zinn, Bismuth, Zink und/oder Kalium.

Geeignete metallhaltige Koordinationsverbindungen sind zum Beispiel alle Metall-Acetylacetonate wie Nickel(II)-acetylacetonat, Zink(II)-acetylacetonat, Kupfer(II)-acetylacetonat, Molybdändioxoacetylacetonat, alle Eisen-acetylacetonate, alle Cobalt-acetylacetonate, alle Zirconiumacetylacetonate, alle Titan-acetylacetonate, alle Bismuth-acetylacetonate und alle Zinnacetylacetonate. Besonders geeignete metallorganische Salze und organische Metallsalze, insbesondere wie oben definiert, als Katalysatoren im Sinne der vorliegenden Erfindung sind zum Beispiel Organozinn-, Zinn-, Zink-, Bismuth und Kalium-Salze, insbesondere entsprechende MetallCarboxylate, -Alkoholate, -Thiolate und -Mercaptoacetate, wie zum Beispiel Dibutylzinndiacetat, Dimethylzinndilaurat, Dibutylzinndilaurat (DBTDL), Dioctylzinndilaurat (DOTDL), Dimethylzinndineodecanoat, Dibutylzinndineodecanoat, Dioctylzinndineodecanoat, Dibutylzinndioleat, Dibutylzinn-bis-n-laurylmercaptid, Dimethylzinn-bis-n-laurylmercaptid, Monomethylzinn-tris-2-ethylhexylmercaptoacetat, Dimethylzinn-bis-2-ethylhexylmercapto-acetat, Dibutylzinn-bis-2-ethylhexylmercaptoacetat, Dioctylzinn-bis-isooctylmercaptoacetat, Zinn(II)-acetat, Zinn(II)-2-ethylhexanoat (Zinn(II)-octoat), Zinn(II)-isononanoat (Zinn(II)-3,5,5-trimethylhexanoat), Zinn(II)-neodecanoat, Zinn(II)-ricinoleat, Zink(II)-acetat, Zink(II)-2-ethyl-hexanoat (Zink(II)-octoat), Zink(II)-isononanoat (Zink(II)-3,5,5-trimethylhexanoat), Zink(II)-neodecanoat, Zink(II)-ricinoleat, Bismuthacetat, Bismuth-2-ethylhexanoat, Bismuthoctoat, Bismuthisononanoat, Bismuthneodecanoat, Kaliumformiat, Kaliumacetat, Kalium-2-ethylhexanoat (Kaliumoctoat), Kaliumisononanoat, Kalium-neodecanoat und/oder Kalium-ricinoleat. Geeignete

metallhaltige Katalysatoren werden in der Regel vorzugsweise so ausgewählt, dass sie keinen störenden Eigengeruch aufweisen, toxikologisch im Wesentlichen unbedenklich sind und dass die resultierenden Polyurethansysteme, insbesondere Polyurethanschäume möglichst geringe Katalysator-bedingte Emissionen aufweisen.

Neben Aminen und metallhaltigen Verbindungen können auch Ammoniumsalze als Katalysatoren eingesetzt werden. Geeignet sind zum Beispiel Ammoniumformiat und/oder Ammoniumacetat.

Geeignete Katalysatoren sind beispielsweise in DE 102007046860, EP 1985642, EP 1985644, EP 1977825, US 2008/0234402, EP 0656382 B1 und US 2007/0282026 A1 und den darin zitierten Patentschriften genannt.

Geeignete Einsatzmengen an Katalysatoren richten sich nach dem Typ des Katalysators und liegen vorzugsweise im Bereich von 0,01 bis 10,0 pphp, besonders bevorzugt im Bereich von 0,02 bis 5,00 pphp (= Gewichtsteile bezogen auf 100 Gewichtsteile Polyol).

Als optionale Zusatzstoffe können alle nach dem Stand der Technik bekannten Substanzen verwendet werden, die bei der Herstellung von Polyurethanen, insbesondere von PU-Heißweichschaumstoffen, Verwendung finden, wie zum Beispiel Treibmittel, vorzugsweise Wasser zur Bildung von $CO_2$ und, falls nötig, weitere physikalische Treibmittel, Vernetzer und Kettenverlängerer, Stabilisatoren gegen oxidativen Abbau (so genannte Antioxidantien), Flammschutzmittel, Tenside, Biozide, zellverfeinernde Additive, Zellöffner, feste Füllstoffe, Antistatik-Additive, Nukleierungsmittel, Verdicker, Farbstoffe, Pigmente, Farbpasten, Duftstoffe, Emulgatoren, Puffersubstanzen und/oder katalytisch aktive Substanzen, insbesondere wie oben definiert.

Bei der Herstellung von PU-Heißweichschaumstoffen wird in der Regel Wasser als Treibmittel eingesetzt. Vorzugsweise wird so viel Wasser eingesetzt, dass die Wassermenge 0,10 bis 10,0 pphp beträgt (pphp = Gewichtsteile bezogen auf 100 Gewichtsteile Polyol).

Es können auch geeignete physikalische Treibmittel eingesetzt werden. Dies sind beispielsweise verflüssigtes $CO_2$, und leichtflüchtige Flüssigkeiten, beispielsweise Kohlenwasserstoffe mit 3, 4 oder 5 Kohlenstoff-Atomen, bevorzugt cyclo-, iso- und n-Pentan, Sauerstoff-haltige Verbindungen wie Methylformiat, Aceton und Dimethoxymethan, oder Chlorkohlenwasserstoffe, bevorzugt Dichlormethan und 1,2-Dichlorethan.

Neben Wasser und den physikalischen Treibmitteln, können auch andere chemische Treibmittel eingesetzt werden, die mit Isocyanaten unter Gasentwicklung reagieren, wie beispielsweise Ameisensäure.

Als optionale Vernetzer und optionale Kettenverlängerer werden niedermolekulare, gegenüber Isocyanaten reaktive, mehrfunktionelle Verbindungen bezeichnet. Geeignet sind zum Beispiel Hydroxyl- oder Amin-terminierte Substanzen wie Glycerin, Neopentylglycol, 2-Methyl-1,3-propandiol, Triethanolamin (TEOA), Diethanolamin (DEOA) und Trimethylolpropan. Die Einsatzkonzentration liegt üblicherweise zwischen 0,1 und 5 Teilen, bezogen auf 100 Teile Polyol, kann aber je nach Formulierung auch davon abweichen.

Geeignete optionale Stabilisatoren gegen oxidativen Abbau, so genannte Antioxidantien, sind vorzugs-weise alle gängigen Radikalfänger, Peroxidfänger, UV-Absorber, Lichtstabilisatoren, Komplexbildner für Metallionenverunreinigungen (Metalldeaktivatoren). Bevorzugt einsetzbar sind Verbindungen folgender Substanzklassen, bzw. Substanzklassen enthaltend folgende funktionelle Gruppen, wobei als Substituenten an den jeweiligen Grundkörpern insbesondere diejenigen bevorzugt sind, die gegenüber Isocyanat reaktive Gruppen besitzen: 2-(2'-Hydroxyphenyl)benzotriazole, 2-Hydroxybenzophenone, Benzoesäuren und Benzoate, Phenole, insbesondere enthaltend tert-Butyl- und oder Methylsubstituenten am Aromaten, Benzofuranone, Diarylamine, Triazine, 2,2,6,6-Tetramethylpiperidine, Hydroxylamine, Alkyl- und Arylphosphite, Sulfide, Zinkcarboxylate, Diketone.

Geeignete optionale Flammschutzmittel im Sinne dieser Erfindung sind alle Substanzen, die nach dem Stand der Technik als dafür geeignet betrachten werden. Bevorzugte Flammschutzmittel sind beispielsweise flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe wie Blähgraphit und Melamin geeignet.

Zur Stabilisierung der aufsteigenden Schaummischung und zur Beeinflussung der Schaumeigenschaften von Polyurethanschäumen werden bei der Herstellung von PU-Heißweichschaumstoffen gewöhnlich organomodifizierte Siloxane eingesetzt. Dazu geeignete (organomodifizierte) Siloxane sind beispielsweise in den folgenden Schriften beschrieben: EP 0839852, EP 1544235, DE 102004001408, EP 0839852, WO 2005/118668, US 20070072951, DE 2533074, EP 1537159 EP 533202, US 3933695, EP 0780414, DE 4239054, DE 4229402, EP 867465. Die Herstellung dieser Verbindungen kann wie im Stand der Technik beschrieben erfolgen. Geeignete Beispiele sind z. B. in US 4147847, EP 0493836 und US 4855379 beschrieben. Schaumstabilisatoren für PU-Heißweichschaumstoffe sind charakterisiert durch große Siloxanstrukturen mit mehr als 50 Si-Einheiten und angehängten Polyethern. Diese Schaumstabilisatoren werden auch als Polydialkylsiloxan-Polyoxyalkylen-copolymeren bezeichnet. Diese Verbindungen sind vorzugsweise so aufgebaut, dass z.B. ein langkettiges Copolymerisat aus Ethylen- und Propylenoxid mit einem Polydimethylsiloxanrest verbunden ist. Die Verknüpfung zwischen dem Polydialkylsiloxan und dem Polyetherteil kann dabei über eine SiC-Verknüpfung oder eine Si-O-C-Bindung erfolgen. Strukturell kann der oder können die unterschiedlichen Polyether

terminal oder seitenständig an das Polydialkylsiloxan gebunden sein. Der Alkylrest des Siloxans kann dabei aliphatisch, cycloaliphatisch oder aromatisch sein. Ganz besonders vorteilhaft sind dabei Methylgruppen. Das organo-modifizierte Polydialkylsiloxan kann dabei linear sein oder auch Verzweigungen enthalten. Geeignete Stabilisatoren, insbesondere Schaumstabilisatoren sind unter anderem in US 2834748, US2917480 sowie in US3629308 beschrieben. Aufgabe des Schaumstabilisators ist es dabei, die Stabilität der aufschäumenden Reaktionsmischung zu gewährleisten. Der Beitrag zur Schaumstabilisierung korreliert dabei mit der Siloxankettenlänge. Ohne Schaumstabilisator wird ein Kollaps beobachtet und damit kein homogener Schaumstoff erhalten. Bei einigen nicht erfindungsgemäßen PU-Weichschaumtypen mit höherer Stabilität und damit geringerer Neigung zum Kollaps können auch niedermolekulare Polyether-Siloxane eingesetzt werden. Diese haben dann Siloxankettenlängen deutlich kürzer als 50. So werden bei PU-Kaltweichschaumstoffen oder Esterschaumstoffen unmodifizierte oder modifizierte kurzkettige Siloxane verwendet. Beim Einsatz von langkettigen und damit potenteren Siloxanstabilisatoren werden dagegen bei solchen Schaumtypen eine Überstabilisierung und damit ein Schrumpfen nach der Schaumherstellung beobachtet.

Schaumstabilisatoren können im Rahmen der vorliegenden Erfindung grundsätzlich beliebig ausgewählt werden, solange Kombinationen aus Verbindungen der Formeln (1a) und (1b) erfindungsgemäß zum Einsatz im PU-Heißweichschaumstoff gelangen. Diese dienen, wie bereits erläutert, insbesondere der Verbesserung der Formstabilität der Schaumkörper nach einer Komprimierung, insbesondere nach einer Rollkomprimierung.

Die Verbindungen der Formeln (1a) und (1b) können zum Beispiel mit geeigneten Lösungsmitteln und/oder weiteren Zusatzstoffen eingesetzt werden. Als optionale Lösungsmittel kommen alle nach dem Stand der Technik geeigneten Substanzen in Frage. Je nach Anwendung können aprotischunpolare, aprotisch-polare und protische Lösungsmittel eingesetzt werden. Geeignete aprotischunpolare Lösungsmittel können beispielsweise ausgewählt werden aus folgenden Substanzklassen, bzw. Substanzklassen enthaltend folgende funktionelle Gruppen: aromatische Kohlenwasserstoffe, aliphatische Kohlenwasserstoffe (Alkane (Paraffine) und Olefine), Carbonsäurester (z.B. Isopropylmyristat, Propylenglycoldioleat, Decylcocoat oder andere Ester von Fettsäuren) und Polyester, (Poly )Ether und/oder halogenierte Kohlenwasserstoffe niedriger Polarität. Geeignete aprotisch-polare Lösungsmittel können beispielsweise ausgewählt werden aus folgenden Substanzklassen, bzw. Substanzklassen enthaltend folgende funktionelle Gruppen: Ketone, Lactone, Lactame, Nitrile, Carbonsäureamide, Sulfoxide und/oder Sulfone. Geeignete protische Lösungsmittel können beispielsweise ausgewählt werden aus folgenden Substanz-klassen, bzw. Substanzklassen enthaltend folgende funktionelle Gruppen: Alkohole, Polyole, (Poly-)Alkylenglykole, Amine, Carbonsäuren, insbesondere Fettsäuren und/oder primäre und sekundäre Amide. Besonders bevorzugt sind Lösungsmittel, die in der Verschäumung problemlos verarbeitet werden können und die Eigenschaften des Schaums nicht negativ beeinflussen. So sind zum Beispiel Isocyanat-reaktive Verbindungen geeignet, da diese mit in die Polymermatrix einreagieren und keine Emissionen im Schaum generieren. Beispiele sind OH-funktionelle Verbindungen wie (Poly-)Alkylenglykole, vorzugsweise Monoethylen-glycol (MEG oder EG), Diethylenglycol (DEG), Triethylenglycol (TEG), 1-2-Propylen-glycol (PG), Dipropylenglycol (DPG), Trimethylenglycol (1,3-Propandiol PDO), Tetra-methylenglycol (Butandiol BDO), Butyldiglycol (BDG), Neopentylglycol, 2-Methyl-1,3-propan-diol (Ortegol CXT) und höhere Homologe davon wie zum Beispiel Polyethylenglykol (PEG) mit mittleren Molekülmassen zwischen 200 g/mol und 3000 g/mol. Weitere besonders bevorzugte OH-funktionelle Verbindungen sind Polyether mit mittleren Molekülmassen von 200 g/mol bis 4500 g/mol, insbesondere 400 g/mol bis 2000 g/mol, hierin bevorzugt Wasser-, Allyl-, Butyl- oder Nonyl-gestartete Polyether, insbesondere solche, die auf Propylenoxid- (PO) und/oder Ethylenoxid-blöcken (EO) basieren.

Werden die Verbindungen nach den Formeln (1a) und (1b) erfindungsgemäß eingesetzt, oder vorgemischte Silikonkombinationen der Verbindungen mit den Formeln (1a) und (1b) mit zusätzlichen Trägern, gelöst oder in Kombination mit einem Lösungsmittel eingesetzt, beträgt das Massenverhältnis der Summe aller Silikonkomponenten zum Lösungsmittel vorzugsweise von 0,1 zu 1 bis 9 zu 1, bevorzugt von 0,25 zu 1 bis 5 zu 1 und besonders bevorzugt von 0,5 zu 1 bis 4 zu 1.

Die beiden Siloxankomponenten - nämlich Verbindungen der Formeln (1a) und (1b) - können gemäß bevorzugten Ausführungsformen der Erfindung jeweils pur oder abgemischt mit Lösungsmitteln separat der Schäummischung zugesetzt werden oder vor Zusatz auch miteinander gemischt werden.

Bevorzugt kann einer Zusammensetzung zur Herstellung von PU-Heißweichschaumstoffen so viel an Verbindungen mit den Formeln (1a) zugegeben werden, dass deren Massenanteil am fertigen Polyurethanschaum von 0,1 bis 5 Gew.-%, bevorzugt von 0,25 bis 3,0 Gew.-%, besonders bevorzugt 0,5 bis 2,0 Gew.-% beträgt. Die Verbindung der Formel (1b) wird bevorzugt in einem Massenanteil am fertigen Polyurethanschaum von 0,1 bis 5 Gew.-%, bevorzugt von 0,1 bis 2,0 Gew.-%, besonders bevorzugt 0,1 bis 1,5 Gew.-% eingesetzt.

Es kann vorteilhaft sein, wenn bei der Herstellung des PU-Heißweichschaumstoffs eine Zusammensetzung hergestellt und/oder eingesetzt wird, die zumindest die erfindungsgemäßen Verbindungen nach den Formeln (1a) und (1b), zumindest eine Polyolkomponente, ggf. zumindest eine Isocyanatkomponente sowie optional ein oder mehrere Treibmittel aufweist, und diese Zusammensetzung reagiert wird.

Es ist bevorzugt, dass die Verbindungen nach den Formeln (1a) und (1b) jeweils in Gesamtmenge in einem Massenanteil von 0,1 bis 5,0 Teilen (pphp), bevorzugt 0,1 bis 3,0 Teilen und besonders bevorzugt 0,3 bis 2,0 Teilen

bezogen auf 100 Teile (pphp) Polyolkomponente eingesetzt werden.

Die Produktion der erfindungsgemäßen PU-Heißweichschaumstoffe kann nach allen dem Fachmann geläufigen Verfahren erfolgen, beispielsweise im Handmischverfahren oder bevorzugt mit Hilfe von Verschäumungsmaschinen, insbesondere Niederdruck- oder Hochdruck-Verschäumungsmaschinen. Dabei können diskontinuierliche Verfahren oder kontinuierliche Verfahren zum Einsatz kommen.

Es können alle dem Fachmann bekannten Verfahren zur Herstellung von PU-Heißweichschaumstoffen verwendet werden. So kann zum Beispiel der Schäumungsprozess sowohl in horizontaler als auch in vertikaler Richtung, in diskontinuierlichen oder kontinuierlichen Anlagen erfolgen. Ebenso können die erfindungsgemäß eingesetzten Zusammensetzungen für die $CO_2$-Technologie benutzt werden. Die Verwendung in Niederdruck- und Hochdruckmaschinen ist möglich, wobei die zu verarbeitenden Zusammensetzungen sowohl direkt in die Mischkammer dosiert werden können oder auch schon vor der Mischkammer einer der danach in die Mischkammer gelangenden Komponenten zugemischt werden. Die Zumischung kann auch im Rohstofftank erfolgen.

Ein ganz besonders bevorzugter PU-Heißweichschaumstoff im Sinne dieser Erfindung weist insbesondere die folgende Zusammensetzung auf:

Tabelle 1:

| Komponente | Gewichtsanteile (pphp) |
|---|---|
| Polyol | 100 |
| Wasser | 0 bis < 10, vorzugsweise 0,5 bis 6 |
| (Amin-)Katalysator | 0,05 bis 5 |
| Zinn-Katalysator | 0 bis 5, vorzugsweise 0,01 bis 2 |
| Verbindungen der Formeln (1a) | 0,1 bis 5, vorzugsweise 0,1 bis 3 |
| Verbindungen der Formeln (1b) | 0,1 bis 5, vorzugsweise 0,1 bis 3 |
| Physikalisches Treibmittel | 0 bis 130 |
| Flammschutzmittel | 0 bis 70 |
| Füllstoffe | 0 bis 150 |
| weitere Additive | 0 bis 20 |
| Isocyanat-Index: | größer 75 und kleiner 130 |

Ein weiterer Gegenstand der vorliegenden Erfindung liegt in der Verwendung einer Kombination von zumindest einer Verbindung der Formel (1a) und zumindest einer Verbindung der Formel (1b), (1a) und (1b) wie jeweils weiter oben bereits definiert, bei der Herstellung von PU-Heißweichschaumstoff-Formkörpern, wobei der PU-Heißweichschaumstoff-Formkörper durch Umsetzung mindestens einer Polyolkomponente und mindestens einer Isocyanatkomponente in Gegenwart mindestens eines Treibmittels erhalten wurde, zur Bereitstellung von PU-Heißweichschaumstoff-Formkörpern mit verbesserter Dimensionswiedererlangung nach Kompression über einen Zeitraum von mindestens 20 Stunden.

Ein weiterer Gegenstand der vorliegenden Erfindung liegt in der Verwendung einer Kombination von zumindest einer Verbindung der Formel (1a) und zumindest einer Verbindung der Formel (1b), (1a) und (1b) wie jeweils weiter oben bereits definiert, zur Verbesserung der Dimensionswiedererlangung von PU-Heißweichschaumstoff-Formkörpern nach deren Kompression über einen Zeitraum von mindestens 20 Stunden, wobei der PU-Heißweichschaumstoff-Formkörper durch Umsetzung mindestens einer Polyolkomponente und mindestens einer Isocyanatkomponente in Gegenwart mindestens eines Treibmittels in Gegenwart zumindest einer Verbindung der Formel (1a) sowie zumindest einer Verbindung der Formel (1b) erhältlich ist.

Ein weiterer Gegenstand der vorliegenden Erfindung liegt in der Verwendung von PU-Heißweichschaumstoff in Matratzen und/oder Kissen, insbesondere Matratzen, wobei der PU-Heißweichschaumstoff durch Umsetzung mindestens einer Polyolkomponente und mindestens einer Isocyanatkomponente in Gegenwart zumindest einer Verbindung der Formel (1a) sowie zumindest einer Verbindung der Formel (1b), (1a) und (1b) wie jeweils weiter oben definiert, erhalten wurde. Hierzu sei insbesondere auf die vorangegangenen Ausführungen verwiesen, die auch für diesen Gegenstand Gültigkeit haben.

Die erfindungsgemäße Verwendung ermöglicht die Bereitstellung von Matratzen und/oder Kissen mit verbesserter Dimensionswiedererlangung nach Kompression über einen Zeitraum von mindestens 20 Stunden. Die erfindungsgemäße Verwendung ermöglicht eine verbesserte Dimensionswiedererlangung von Matratzen und/oder Kissen nach deren Kompression über einen Zeitraum von mindestens 20 Stunden.

Ein weiterer Gegenstand der Erfindung ist ein Verfahren zur Lagerung und/oder zum Transport von PU-Schaumstoff-Formkörpern, vorzugsweise Matratzen und/oder Kissen,
wobei

(a) in einem ersten Schritt ein PU-Heißweichschaumstoff-Formkörper durch Umsetzung mindestens einer Polyolkomponente und mindestens einer Isocyanatkomponente in Gegenwart zumindest einer Verbindung der Formel (1a) sowie zumindest einer Verbindung der Formel (1b), (1a) und (1b) wie jeweils weiter oben definiert, und mindestens eines Treibmittels sowie mindestens eines Katalysators bereitgestellt wird,
(b) in optionalen Folgeschritten der erhaltene PU-Heißweichschaumstoff ggf. weiter aufbereitet wird, so dass er für den Anwendungszweck bereit gemacht ist,
(c) und wobei der (ggf. für den Anwendungszweck bereit gemachte) PU-Heißweichschaumstoff-Formkörper in einem finalen Schritt um mindestens 20%, vorzugsweise mindestens 30%, insbesondere mindestens 40%, bezogen auf sein Ausgangsvolumen, komprimiert und ggf. vakuumiert, und von einem Hilfsmittel, insbesondere Verpackungsmittel, in komprimierter Form gehalten wird, und der Lagerung und/oder dem Transport zugeführt wird.

Ein weiterer Gegenstand der Erfindung ist ein Verfahren zur Herstellung von Polyurethan-Heißweichschaum mit einer Porosität von 1 bis 6 scfm, vorzugsweise 1,5 bis 4,5 scfm, insbesondere 1,75 bis 4,25 scfm,

durch Umsetzung mindestens einer Polyolkomponente und mindestens einer Isocyanatkomponente in Gegenwart zumindest einer Verbindung der Formel (1a) sowie zumindest einer Verbindung der Formel (1b) und mindestens eines Treibmittels sowie mindestens eines Katalysators,
Formeln (1a) und (1b) wie jeweils weiter oben definert,
insbesondere unter Mitverwendung von Recycling-Polyolen.

Ein weiterer Gegenstand der Erfindung ist eine Mischung, umfassend zumindest eine Verbindung der Formel (1a) sowie zumindest eine Verbindung der Formel (1b), (1a) und (1b) wie jeweils weiter oben definiert, und optional Glykole, Polyether, organische Ester und/oder andere für die Zwecke der PU-Heißweichschaumstoffherstellung geeignete Lösemittel.

## Beispiele

Physikalische Eigenschaften der PU-Weichschaumstoffe:
Die hergestellten PU-Weichschaumstoffe wurden anhand folgender physikalischer Eigenschaften a) bis g) beurteilt:

a) Steigzeit: Die Zeitspanne zwischen dem Ende des Mischens der Reaktionskomponenten und dem Abblasen des Polyurethanschaums.
b) Steighöhe oder Schaumhöhe: ist die Höhe des gebildeten, frei gestiegenen Schaums nach 3 Minuten. Die Schaumhöhe wird in Zentimeter (cm) angegeben.
c) Rücksacken des Schaumstoffes nach dem Ende der Steigphase (=Rückfall): Der Rückfall ergibt sich aus der Differenz der Schaumhöhe nach direktem Abblasen und 3 Minuten nach Abblasen des Schaums. Die Schaumhöhe wird dabei durch eine an einem Zentimetermaß befestigte Nadel auf dem Maximum in der Mitte der Schaumkuppe gemessen. Ein negativer Wert beschreibt hierbei das Rücksacken des Schaumes nach dem Abblasen, ein positiver Wert beschreibt entsprechend das Nachsteigen des Schaumes.
d) Zahl der Zellen pro cm (Zellzahl): Diese wird auf einer Schnittfläche optisch bestimmt (gemessen gemäß DIN EN 15702).
e) Raumgewicht (RG): Die Bestimmung erfolgt, wie in ASTM D 3574 - 11 unter Test A beschrieben, durch Messung der Kerndichte. Das Raumgewicht wird in $kg/m^3$ angegeben.
f) Porosität bestimmt durch die Durchflussmethode: Bei der Luftdurchflußmethode (engl. aif flow method) in Anlehnung an ASTM D 3574 (2011-00) wird das Luftvolumen bestimmt, das in einer bestimmten Zeit durch einen definierten Schaumprobekörper bei Anlegen einer Druckdifferent fließt. Aus den fertigen Schäumen wurden dafür jeweils 12 Probekörper der Größe 5 cm × 5 cm × 2,5 cm quer zur Steigrichtung des Schaumstoffs ausgeschnitten und der Reihe nach in einem für diese Methode konstruierten Messgerät eingespannt. Der Aufbau dieses Gerätes ist unter ASTM D 3574 (2011-00) beschrieben. Das Messgerät erzeugt zwischen dem Inneren des Geräts und der umgebenden Atmosphäre ein Luftdruckdifferenzial von 125 Pa, indem durch den Probenkörper genau so viel Luft angesaugt wird, dass das Differenzial konstant eingestellt werden kann. Dadurch ist der Luftdurchfluss durch den Probenkörper ein Maß für die Porosität des Schaums. Gemessen wurden Werte im Bereich von 0 - 6,5 scfm (Standardkubikfuß pro Minute), wobei in dem Intervall niedrigere Werte einen geschlosseneren Schaum charakterisieren, höhere einen offeneren.
g) Ergebnis des Rolltests. Dieser spezielle Test ist weiter unten im Detail beschrieben.

Der Vollständigkeit halber wird im Folgenden auch das Messprinzip der DIN EN ISO 16000-9:2008-04 erläutert.
Die Werkstoffe werden dabei hinsichtlich Art und Menge der aus ihnen ausgasbaren organischen Substanzen

charakterisiert. Das Analysenverfahren dient zur Ermittlung von Emissionen aus Materialien, die in Möbeln und Matratzen eingesetzt werden. Hierbei werden Prüfkammern zur Messung der Emissionen eingesetzt.

Analytik

Prüfkörper: Probenvorbereitung, Probenahme und Probekörperabmessungen

Die Reaktionsmischung wird in einen oben offenen PE-Plastikbeutel gegeben. Nach dem Aufsteigen und Abblasen des Schaumstoffs wird 3 min nach dem Abblasen der PE-Beutel geschlossen. So wird der Schaumstoff für 12 Stunden bei Raumtemperatur gelagert, um eine vollständige Reaktion zu ermöglichen, aber gleichzeitig ein vorzeitiges Entweichen von VOC Stoffen zu vermeiden. Anschließend wird der PE-Beutel geöffnet und aus dem Zentrum des Schaumstoffblocks ein 7 cm x 7 cm x 7 cm großer Würfel entnommen und sofort in Aluminiumfolie gewickelt und in einem PE-Beutel luftdicht eingeschlossen. Nun wurde er in das analytische Labor transportiert und der Schaumstoffwürfel in eine gereinigte 30L Glasprüfkammer gegeben. In der Prüfkammer herrschen kontrollierte klimatische Bedingungen (Temperatur 21°C, Luftfeuchte 50%). Die Prüfkammer wird pro Stunde von dem halben Prüfkammervolumen durchströmt. Nach 24 Stunden wird aus der Prüfkammerluft Proben entnommen. Tenax-Adsorptionsröhrchen dienen dabei der Absorption der VOC Stoffe. Das Tenax Röhrchen wird anschließend erhitzt und die dabei freigesetzten flüchtigen Substanzen mit Hilfe eines Inertgas-Stromes in einer Kühlfalle eines Temperatur-programmierbaren Verdampfers kryofokusiert. Nach Beendigung der Ausheizphase wird die Kühlfalle rasch auf 280°C erhitzt. Dabei verdampfen die fokussierten Substanzen. Sie werden anschließend in der gaschromatographischen Trennsäule aufgetrennt und massenspektrometrisch detektiert. Durch Kalibration mit Bezugssubstanzen ist eine halbquantitative Abschätzung der Emission, ausgedrückt in "$\mu g/m^3$", möglich. Als quantitative Bezugssubstanzen werden Toluol für die VOC-Analyse (VOC-Wert) verwendet. Anhand ihrer Massenspektren und Retentionsindizes können Signalpeaks Substanzen zugeordnet werden. Es wird das folgendes Gerät für die Analyse verwendet: Fa. Gerstel, D-45473 Mühlheim an der Ruhr, Eberhard-Gerstel-Platz 1, TDS-3 / KAS-4, Tenax®-Desorptionsröhrchen, Agilent Technologies 7890A (GC) / 5975C (MS), Säule: HP Ultra2 (50m, 0,32mm, 0,52μm), Trägergas: Helium. Genauere Durchführungsbestimmungen können dabei der DIN EN ISO 16000-9:2008-04 entnommen werden.

Im Folgenden wird der Rollverformungstest beschrieben, mit dem im Sinne dieser Erfindung die Dimensionswiedererlangung nach Kompression überprüfbar ist.

Rollverformungstest (kurz "Rolltest")

Zielstellung:

Aufgabe des Tests ist es, die Bedingungen von gerollten Matratzen im Labor zu simulieren. Da es hierfür keinen aussagekräftigen Industriestandard gibt, wurde ein neuer Test entwickelt, der das Aufrollen von Matratzenschaumstoffen im kleinen Maßstab nachbildet.

Probenvorbereitung:

Aus den PU-Weichschaumstoffblöcken, wie sie zum Beispiel aus Handverschäumungen erhalten werden, werden Probenkörper mit den Maßen 12 cm (Breite), 16 cm (Länge) und 2,5 cm (Dicke) mit einer Messerbandsäge herausgeschnitten. Dabei wird eine mittlere Position in Schaumblöcken aus Handverschäumungen gewählt. Der Probenkörper wird so herausgeschnitten, dass die Steigrichtung des Schaumes bei der Herstellung rechtwinklig zur Länge und Breite des Probenkörpers steht. Probenkörper werden mit einem Filzschreiber gekennzeichnet.

Durchführung Test:

Der Probenkörper wird an einer 12 cm-Kante mit einem dünnen Metallstab mit 5 - 8 mm Durchmesser (z.B. Metall-Kugelschreiber) zusammengedrückt. Dann beginnt man den Schaumprobenkörper um diesen Metallstab von Hand aufzurollen. Dabei wird der Schaum stark komprimiert und es entsteht eine Rolle mit einem Durchmesser von etwa 3 - 4 cm. Diese Rolle wird mit der Hand in diesem komprimierten Zustand fixiert und vollständig in eine Pappröhre geschoben. Die Pappröhre hat einen Innendurchmesser von 4 cm und ist mindestens 13 cm lang. Sobald sich der gerollte Schaum vollständig in der Röhre befindet, wird der Metallstift herausgezogen. Zur Verringerung der Reibung beim Herausziehen kann der Metallstift vor dem Rollen des Schaums leicht angefettet werden. Der Schaum füllt dann das Volumen der Röhre. Dabei ist die Kompression des Schaums im Zentrum sehr viel stärker, als am Rand zur Röhre. Anschließend wird die Rolle unter kontrollierten und konstanten Bedingungen (Temperatur: 21 °C, Luftfeuchte: 60%) 7 Tage gelagert. Nach 168 Stunden wird der Schaum mit den Fingern aus der Röhre gezogen, auf eine gerade Fläche gelegt

und das Ausrollen des Schaums beobachtet. Dabei darf die Expansion des Schaums nicht gestört oder beeinflusst werden.

Auswertung:

Dem PU-Weichschaumstoffkörper wird 10 Minuten Zeit zur Expansion gelassen. Anschließend werden die Probenkörper bewertet. Hierbei ist das wichtigste Kriterium, ob der Schaum vollständig wieder seine ursprüngliche Dicke wiedergewonnen hat, oder - speziell an dem stärker komprimierten Rand - noch Verdichtungszonen aufweist. Manchmal ist auch an der Oberfläche des Probenkörpers noch eine Rille von der Kompression erkennbar. Sehr schlechte Probenkörper verbleiben an einem Ende aufgerollt. Eine leichte Biegung des Probenkörpers nach Expansion ist normal und wird nicht in die Bewertung einbezogen. Folgende Abstufungen wurden für die Evaluierung verwendet:

+++ : Probenkörper hat sich vollständig entrollt, überhaupt keine Kompressionslinien oder Verdichtungen erkennbar, Expansion erfolgt schnell und ist schon nach 5 min vollständig.
++ : Der Probenkörper hat an allen Stellen wieder die Dicke von 2,5 cm erreicht. An der Oberfläche (besonders an dem stärker komprimierten Ende) sind nach 10 Minuten keine Einkerbungen und Rillen mehr sichtbar.
+ : Der Probenkörper hat an allen Stellen wieder die Dicke von 2,5 cm erreicht. Allerdings sind an der Oberfläche (besonders an dem stärker komprimierten Ende) nach wie vor leichte Einkerbungen und Rillen sichtbar.
0 : Der Probenkörper weist an dem stärker komprimierten Ende eine leichte Verdichtung auf. Die Dicke beträgt dort mehr als 2,0 cm, aber weniger als 2,5 cm. Eine Einkerbung ist an diesem Ende deutlich sichtbar.
- : Probenkörper weist an dem stärker komprimierten Ende eine leichte Verdichtung auf. Die Dicke der Probe ist dort mehr als 1 cm aber noch deutlich weniger als 2,0 cm.
- - : Probenkörper weist an dem stärker komprimierten Ende eine starke Verdichtung auf. Die Dicke der Probe ist dort weniger als 1 cm. Die Probe ist an diesem Ende noch ansatzweise eingerollt.
- - - : Probenkörper ist an dem stärker komprimierten Ende nach wie vor eingerollt und komprimiert.

Die Evaluierung wird vorzugsweise von mindestens zwei Personen vorgenommen. Die Ergebnisse werden dokumentiert. Im Rahmen der vorliegenden Erfindung wurde die Evaluierung von vier Personen vorgenommen, die zu übereinstimmenden Ergebnissen kamen.

Störungen und Randbedingungen des Tests: Bei dem Test ist auf korrekte Dimensionen des Probenkörpers und gleichmäßiger Durchführung des Einrollens zu achten. Der Schaumstoff-Probenkörper muss konstante Zellstrukturparameter aufweisen, d.h. im Besonderen eine konstante Zellgröße und eine konstante Luftdurchlässigkeit. Der Metallstift darf nicht zu stark gefettet werden, damit kein Fett in die Probe eindringt. Konstante Lagerbedingungen sind einzuhalten. Probenkörper mit den verschiedenen Evaluierungsstufen sind zum Vergleich bereit zu halten.

Genauigkeit des Tests:

Die Durchführung des Tests mit mehreren Personen zur Evaluierung führt regelmäßig zu übereinstimmenden Bewertungen. Auch bei Wiederholungsmessungen wurde regelmäßig das gleiche Ergebnis bestätigt. Damit erweist sich der Test als zuverlässig.

PU-Heißweichschaumstoff - Verschäumungsbeispiele

Beispiel 1: Herstellung von PU-Heißweichschaumstoffen (Weichblockschaum)

Für die anwendungstechnische Ausprüfung der erfindungsgemäßen Verbindungen der Formeln (1a) und (1b) wurde die in Tabelle 2 angegebene PU-Heißweichschaumformulierung verwendet.

Tabelle 2: Formulierung 1 für PU-Heißweichschaumstoff-Herstellung.

| Formulierung 1 | Massenteile (pphp) |
|---|---|
| Polyol 1[1)] | 100 Teile |
| Wasser | 4,00 Teile |
| Zinn-Katalysator[2)] | 0,20 - 0,28 Teile |
| TEGOAMIN® DMEA[3)] | 0,15 Teile |
| SCHAUMSTABILISATOR 1[4)] | 0,40 oder 0,45 Teile |
| gegebenenfalls Silikon-Additive[5)] | 1,0 Teile |

(fortgesetzt)

| Formulierung 1 | Massenteile (pphp) |
|---|---|
| Desmodur® T 80[6)] | 50,0 Teile |

[1)] Polyol 1: Voranol® CP 3322 erhältlich bei der Firma Dow Chemical, hierbei handelt es sich um ein glycerin-basiertes Polyetherpolyol mit einer OH-Zahl von 48 mg KOH/g und vorwiegend sekundären OH-Gruppen, mittlere Molmasse = 3500 g/mol.
[2)] KOSMOS® 29, erhältlich bei der Firma Evonik Industries: Zinn(II)-Salz der 2-Ethylhexansäure.
[3)] TEGOAMIN® DMEA: Dimethylethanolamin, erhältlich bei der Firma Evonik Industries. AminKatalysator zur Herstellung von Polyurethanschäumen.
[4)] Polyethermodifiziertes Polysiloxan gemäß nachfolgender Struktur:

<u>Schaumstabilisator 1 (entspricht Verbindung der Formel 1a):</u>

Polyethersiloxan folgender Struktur

$$[R^1Me_2SiO_{1/2}]_a\ [Me_2SiO_{2/2}]_b\ [R^2MeSiO_{2/2}]_c\ [MeSiO_{3/2}]_d\ [SiO_{4/2}]_e$$

wobei

a= 2
b= 70
c= 4
d= 0
e= 0
mit:

$$a+b+c+d+e = 76$$

$R^1$ = Me
$R^2$ = gleiche oder verschiedene Polyether der allgemeinen Formel (e), erhältlich aus der Polymerisation von Ethylenoxid und Propylenoxid,

Formel (e):

$$-[CH_2]_f-O-[C_2H_4O]_g-[C_3H_6O]_h-R^3$$

mit:

37,5 mol% Polyether 1, worin
f = 3
g= 37
h= 38
wobei gilt

$$g + h = 75,$$

statistisch aufgebaut

$R^3$= Methyl
und
62,5 mol% Polyether 2, worin
f = 3
g= 14
h= 0
wobei gilt

$$g + h = 14,$$

statistisch aufgebaut
$R^3$= Methyl.

In den erfindungsgemäßen Versuchen wurden kurzkettige Siloxankomponenten zu einer PU-Heißweichschaumformulierung enthaltend eine hochmolekulare Silikonkomponente (gemäß Formel 1a) als Schaumstabilisator zugesetzt. Die 3 ausgewählten Silikon-Additive (entsprechen jeweils Verbindungen der Formel 1b) sind nachfolgend charakterisiert:

[5)] Silikon-Additiv 1

Unmodifiziertes Silikonöl folgender Zusammensetzung

$$[R^4Me_2SiO_{1/2}]_i\ [Me_2SiO_{2/2}]_j\ [R^5MeSiO_{2/2}]_k\ [MeSiO_{3/2}]_l\ [SiO_{4/2}]_m$$

wobei

i= 2
j= Verteilung 2 bis 15, Maximum bei 9
k= 0
l= 0
m= 0
mit:
i+j+k+l+m = Verteilung 4 bis 17, Maximum bei 11
$R^4$ = Me

Silikon-Additiv 2

Polyether-modifiziertes Siloxan mit folgenden Strukturparametern:

$$[R^4Me_2SiO_{1/2}]_i\ [Me_2SiO_{2/2}]_j\ [R^5MeSiO_{2/2}]_k\ [MeSiO_{3/2}]_l\ [SiO_{4/2}]_m$$

wobei

i= 2
j= 4,0
k= 2,0
l= 0
m= 0
mit:

$$i+j+k+l+m = 8$$

$R^4$ = Me
$R^5$ = Polyether 1 gemäß

Formel f:

$$-[CH_2]_n-O-[C_2H_4O]_o-[C_3H_6O]_p-R^6$$

wobei gilt:

n = 3
o= 3,5
p= 2,0

wobei gilt

$$o + p = 5{,}5$$

$R^6$= OH

Silikon-Additiv 3

Heptamethyltrisiloxan modifiziert mit n-Octen. Strukturparameter wie folgt:

$$[R^4Me_2SiO_{1/2}]_i\ [Me_2SiO_{2/2}]_j\ [R^5MeSiO_{2/2}]_k\ [MeSiO_{3/2}]_l\ [SiO_{4/2}]_m$$

wobei

i= 2
j= 0
k= 1
l= 0
m= 0
wobei gilt:

$$i+j+k+l+m = 3$$

$R^4$ = Me
$R^5$ = n-Octyl
[6)] Toluylendiisocyanat T 80 (80 % 2,4-Isomer, 20 % 2,6-Isomer) der Firma Covestro, 3 mPa·s, 48 % NCO, Funktionalität 2.

Bei der Verschäumung wurden jeweils 400 g Polyol eingesetzt; die anderen Formulierungsbestandteile wurden entsprechend umgerechnet. Dabei bedeutete beispielsweise 1,00 Teil einer Komponente 1,00 g dieser Substanz je 100 g Polyol.

Die Durchführung der Verschäumungen erfolgte im sogenannten Handmischverfahren. Es wurde die Formulierung 1, wie in Tabelle 2 angegeben, verwendet. Dazu wurden in einem Pappbecher Polyol, die jeweilige Amin-Katalysatorenmischung, der Zinn-Katalysator Zinn(II)-2-ethylhexanoat, Wasser, Schaumstabilisator und gegebenenfalls auch ein zusätzliches niedermolekulares Silikon-Additiv ( Verbindungen der Formeln (1b)) vorgelegt und mit einem Scheibenrührer für 60 s bei 1000 U/min vermischt. Nach dem ersten Rühren wurde das Isocyanat (TDI) zu der Reaktionsmischung gegeben und 7 s bei 2500 U/min verrührt und sofort in eine mit Papier ausgekleidete Kiste (30 cm × 30 cm Grundfläche und 30 cm Höhe) überführt. Der Schaum stieg nach dem Eingießen in der Verschäumungsbox auf. Im Idealfall blies der Schaum bei Erreichen der maximalen Steighöhe ab und sackte dann leicht zurück. Dabei öffneten sich die Zellmembranen der Schaumbläschen und eine offenporige Zellstruktur des Schaumstoffs wurde erhalten. Zur Beurteilung der Eigenschaften wurden die folgenden charakteristischen Parameter bestimmt: Steigzeit, Steighöhe und Rücksacken des Schaumstoffes nach dem Ende der Steigphase (= Rückfall).

Aus den resultierenden PU-Heißweichschaumstoffblöcken wurden definierte Schaumkörper ausgeschnitten, welche weiter analysiert wurden. Folgende physikalischen Eigenschaften wurden an Hand der Probenkörper bestimmt: Zellzahl, Porosität mittels Durchflussmethode, Raumgewicht (RG) und Rollverformung bei Raumtemperatur.

Die Ergebnisse des Einflusses der erfindungsgemäßen Verbindungen hinsichtlich Verschäumung sowie der physikalischen Eigenschaften der resultierenden PU-Heißweichschaumstoffe sind in den nachfolgenden Tabellen zusammengestellt. Als Vergleich wurden zum einen PU-Heißweichschaumstoffe nur mit einem Standard-Weichschaumstabilisator (Schaumstabilisator 1) und nur mit den Silikon-Additiven Silikon-Additiv 1, Silikon-Additiv 2 und Silikon-Additiv 3 hergestellt. Die Schäume ohne Schaumstabilisator sind dabei durchwegs kollabiert und es wurde kein sinnvoll auswertbarer Schaumstoff erhalten. Erfindungsgemäß wurden dann Kombinationen aus Schaumstabilisator 1 und den Silikon-Additiven 1, 2 und 3 eingesetzt.

Tabelle 3:

| | Referenz (nur Schaumstabilisator 1) (Nicht erfindungsgemäß) | Referenz (nur Schaumstabilisator 1) (Nicht erfindungsgemäß) | Referenz (nur Schaumstabilisator 1) (Nicht erfindungsgemäß) | Referenz (nur Schaumstabilisator 1) (Nicht erfindungsgemäß) | Referenz (nur Schaumstabilisator 1) (Nicht erfindungsgemäß) | Referenz (nur Schaumstabilisator 1) (Nicht erfindungsgemäß) |
|---|---|---|---|---|---|---|
| Sn-Katalysa tor-Menge | 0,22 | 0,22 | 0,22 | 0,22 | 0,22 | 0,20 |
| Stabilisa tor | 0,45 Teile Schaumstabilisator 1 | 0,40 Teile Schaumstabilisator 1 | 0,45 Teile Schaumstabilisator 1 | 0,40 Teile Schaumstabilisator 1 | 0,45 Teile Schaumstabilisator 1 | 0,45 Teile Schaumstabilisator 1 |
| Additiv | - | - | - | - | - | - |
| a) Steigzeit (s) | 94 | 94 | 99 | 99 | 98 | 105 |
| b) Steighöhe (cm) | 31,8 | 31,3 | 29,5 | 30,1 | 29,4 | 26,6 |
| c) Rückfall (cm) | -0,3 | -0,5 | -0,1 | -0,1 | -0,1 | -0,1 |
| d) Zellzahl (pro cm) | 14 | 14 | 13 | 14 | 14 | 13 |
| e) Dichte ($kg/m^3$) | 24,4 | 24,4 | 25,1 | 24,8 | 24,8 | 27,1 |
| f) Porosität (SCFM) | 2,12 | 1,86 | 2,23 | 3,64 | 3,23 | 4,79 |
| 9) Rollverformung (7 d, 21 °C) | --- | --- | --- | - | 0 | ++++ |

Tabelle 4:

| | Nur Additiv (Nicht erfindungsgemäß) | Nur Additiv (Nicht erfindungsgemäß) | Schaumstabilisator 1 + Silikon-Additiv 1 (Erfindungsgemäß) | Schaumstabilisator 1 + Silikon-Additiv 1 (Erfindungsgemäß) | Schaumstabilisator 1 + Silikon-Additiv 1 (Erfindungsgemäß) | Schaumstabilisator 1 + Silikon-Additiv 1 (Erfindungsgemäß) |
|---|---|---|---|---|---|---|
| Sn-KatalysatorMenge | 0,20 | 0,22 | 0,22 | 0,22 | 0,24 | 0,26 |
| Stabilisator | - | - | 0,45 Teile Schaumstabilisator 1 | 0,45 Teile Schaumstabilisator 1 | 0,45 Teile Schaumstabilisator 1 | 0,45 Teile Schaumstabilisator 1 |
| Additiv | 1,0 Teile Silikon-Additiv 1 | 1,0 Teile Silikon-Additiv 1 | 1,0 Teile Silikon-Additiv 1 | 1,0 Teile Silikon-Additiv 1 | 1,0 Teile Silikon-Additiv 1 | 1,0 Teile Silikon-Additiv 1 |
| Steigzeit (s) | Kollaps | Kollaps | 96 | 87 | 91 | 89 |
| Steighöhe (cm) | Kollaps | Kollaps | 27,9 | 27,1 | 28,1 | 28,1 |
| Rückfall (cm) | Kollaps | Kollaps | -2,0 | -1,4 | -1,7 | -1,6 |
| Zellen (pro cm) | Kollaps | Kollaps | 14 | 14 | 14 | 14-15 |
| Dichte ($kg/m^3$) | Kollaps | Kollaps | 26,8 | 25,2 | 26,3 | 25,8 |
| Porosität (SCFM) | Kollaps | Kollaps | 3,79 | 2,46 | 2,58 | 1,85 |
| Rollverformung (7 d, 21 °C) | Kollaps | Kollaps | + + | + + | 0 | - |

Tabelle 5:

| | Schaumstabilis ator 1 + Silikon-Additiv 1 (Erfindungsgemäß) | Nur Additiv (Nicht erfindungsgemä ß) | Nur Additiv (Nicht erfindungsgemäß) | Schaumstabilisat or 1 +Silikon-Additiv 2 (Erfindungsgemäß) | Schaumstabi lisator 1 +Silikon-Additiv 2 (Erfindungsgemäß) | Schaumstabi lisator 1 +Silikon-Additiv 2 (Erfindungsgemäß) |
|---|---|---|---|---|---|---|
| Sn-KatalysatorMenge | 0,28 | 0,20 | 0,22 | 0,20 | 0,22 | 0,24 |
| Stabilisator | 0,45 Teile Schaumstabilis ator 1 | - | - | 0,45 Teile Schaumstabilisat or 1 | 0,45 Teile Schaumstabi lisator 1 | 0,45 Teile Schaumstabi lisator 1 |
| Additiv [Teile] | 1,0 Teile Silikon-Additiv 1 | 1,0 Teile Silikon-Additiv 2 | 1,0 Teile Silikon-Additiv 2 | 1,0 Teile Silikon-Additiv 2 | 1,0 Teile Silikon-Additiv 2 | 1,0 Teile Silikon-Additiv 2 |
| Steigzeit (s) | 85 | Kollaps | Kollaps | 107 | 102 | 98 |
| Steighöhe (cm) | 29,1 | Kollaps | Kollaps | 26,5 | 26,8 | 27,4 |
| Rückfall (cm) | -1,4 | Kollaps | Kollaps | -0,1 | 0,0 | -0,1 |
| Zellen (pro cm) | 14-15 | Kollaps | Kollaps | 13 | 13 | 13 |
| Dichte ($kg/m^3$) | 25,4 | Kollaps | Kollaps | 27,5 | 27,4 | 24,1 |
| Porosität (SCFM) | 0,99 | Kollaps | Kollaps | 4,99 | 4,42 | 3,77 |
| Rollverformun g (7 d, 21 °C) | --- | Kollaps | Kollaps | + + + + | + + + + | + + + |

Tabelle 6:

| | Schaumst abilisator 1 +Silikon-Additiv 2 (Erfindun gsgemäß) | Schaumst abilisator 1 +Silikon-Additiv 2 (Erfindun gsgemäß) | Schaumst abilisator 1 +Silikon-Additiv 2 (Erfindun gsgemäß) | Nur Additiv (Nicht erfindungsge mäß) | Nur Additiv (Nicht erfindungsgem äß) | Schaumstab ilisator 1 + Silikon-Additiv 3 (erfindungsgemäß) | Schaumst abilisator 1 + Silikon-Additiv 3 (erfindun gsgemäß) | Schaumst abilisator 1 + Silikon-Additiv 3 (erfindun gsgemäß) |
|---|---|---|---|---|---|---|---|---|
| Sn-KatalysatorMenge | 0,26 | 0,22 | 0,28 | 0,20 | 0,22 | 0,20 | 0,22 | 0,24 |
| Stabilisator | 0,45 Teile Schaumst abilisator 1 | 0,45 Teile Schaumst abilisator 1 | 0,45 Teile Schaumst abilisator 1 | - | - | 0,45 Teile Schaumstab ilisator 1 | 0,45 Teile Schaumst abilisator 1 | 0,45 Teile Schaumst abilisator 1 |
| Additiv | 1,0 Teile Silikon-Additiv 2 | 1,0 Teile Silikon-Additiv 2 | 1,0 Teile Silikon-Additiv 2 | 1,0 Teile Silikon-Additiv 3 | 1,0 Teile Silikon-Additiv 3 | 1,0 Teile Silikon-Additiv 3 | 1,0 Teile Silikon-Additiv 3 | 1,0 Teile Silikon-Additiv 3 |
| Steigzeit (s) | 93 | 90 | 89 | Kollaps | Kollaps | 109 | 103 | 97 |
| Steighöhe (cm) | 27,2 | 28,6 | 27,7 | Kollaps | Kollaps | 27,1 | 27,6 | 27,8 |
| Rückfall (cm) | 0,0 | -0,1 | -0,2 | Kollaps | Kollaps | -0,1 | -0,1 | 0,0 |
| Zellen (pro cm) | 13 | 14 | 13 | Kollaps | Kollaps | 13 | 13 | 13 |
| Dichte ($kg/m^3$) | 27,0 | 24,3 | 26,3 | Kollaps | Kollaps | 28,1 | 27,6 | 26,7 |
| Porosität (SCFM) | 3,12 | 3,03 | 1,32 | Kollaps | Kollaps | 5,34 | 4,91 | 3,76 |
| Rollverformung (7 d, 21 °C) | +++ | + + | - - - | Kollaps | Kollaps | + + + + | + + + + | + + + |

Tabelle 7:

| | Schaumstabilisator 1 + Silikon-Additiv 3 (erfindungsgemäß) | Schaumstabilisator 1 + Silikon-Additiv 3 (erfindungsgemäß) |
|---|---|---|
| Sn-KatalysatorMenge | 0,26 | 0,28 |
| Stabilisator | 0,45 Teile Schaumstabilisator 1 | 0,45 Teile Schaumstabilisator 1 |
| Additiv | 1,0 Teile Silikon-Additiv 3 | 1,0 Teile Silikon-Additiv 3 |
| Steigzeit (s) | 92 | 88 |
| Steighöhe (cm) | 27,4 | 28,6 |
| Rückfall (cm) | 0,0 | -0,1 |
| Zellen (pro cm) | 13 | 13 |
| Dichte (kg/m$^3$) | 26,6 | 25,6 |
| Porosität (SCFM) | 2,21 | 1,32 |
| Rollverformung (7 d, 21 °C) | + + | -- |

Bei der Auswertung der Ergebnisse muss berücksichtigt werden, dass das Ergebnis des Rolltests stark von der Porosität des Schaumstoffs abhängt. Schaumstoffe mit einer geschlosseneren Zellstruktur sind dabei generell schlechter als solche mit einer offenen Zellstruktur. Da die Porosität bei Verschäumungen bedingt durch verschiedenste Einflussfaktoren (Temperaturen, Luftdruck, etc.) in gewissem Umfang variiert, muss für eine aussagekräftige Analyse das Ergebnis des Rolltests jeweils mit der Porosität gekoppelt ausgewertet werden.

Hierzu ist in den Abbildungen FIG. 1 bis FIG. 3 das Ergebnis des Rolltests gegen die Porosität aufgetragen. Jeweils sind die Werte der Referenz (PU-Heißweichschaumstoff nur mit Schaumstabilisator 1) und Referenz + 1 Teil Silikon-Additiv aufgetragen. Um PU-Heißweichschaumstoffe mit unterschiedlicher Porosität zu erhalten, wurden gleiche Verschäumungen an verschiedenen Tagen wiederholt, die Stabilisatormenge variiert und die Menge an Zinnkatalysator (Kosmos 29) verändert. Besonders die Variation des Zinnkatalysators liefert dabei das gewünscht breite Spektrum an Porositätswerten.

Es zeigt sich, dass für die Referenzschaumstoffe eine starke Abhängigkeit des Ergebnisses des Rolltests von der Porosität beobachtet wird. Nicht erfindungsgemäße Schaumstoffe mit Porositäten bis 2,3 scfm sind generell sehr schlecht im Rolltest. Umgekehrt sind nicht erfindungsgemäße PU-Heißweichschaumstoffe sehr gut im Rolltest, wenn sie sehr offen sind (scfm > 4,5). Die Mehrzahl der industriellen PU-Heißweichschaumstoffe liegen allerdings zwischen 1,5 und 4,5 scfm. In diesem Bereich sind für alle erfindungsgemäßen Schaumstoffe überraschenderweise stark verbesserte Ergebnisse im Rolltest gefunden worden. Dabei kommt es bei den Werten generell zu einer gewissen Streuung, da sowohl die Messung der Porosität, aber auch die Messung der Ergebnisse des Rolltests mit Abweichungen behaftet ist. Dennoch lässt sich eine signifikante Verbesserung erkennen.

Wie entnommen werden kann, zeigen die erfindungsgemäße Kombination einer Verbindung nach Formel (1a) mit einer Verbindung der Formel (1b) signifikante Vorteile beim Rollverformungstests von PU-Heißweichschaumstoffen gegenüber dem alleinigen Einsatz einer einzigen hochmolekularen Silikon-Komponente als Schaumstabilisator. Die Wiederherstellung der ursprünglichen Form der Probenkörper nach Rollverformung konnte ganz entscheidend verbessert werden. Der Einsatz ausschließlich niedermolekularer Silikon-Additive (Verbindungen der Formeln (1b)) führt in PU-Heißweichschaumstoffformulierungen zu Kollaps. Kombinationen von einem hochmolekularen Schaumstabilisator (Verbindungen der Formeln (1a)) und niedermolekularen Silikon-Komponenten (Verbindungen der Formeln (1b)) zeigt dabei eine nach wie vor ausreichende Stabilisierung (Rückfälle von weniger als 2,0 cm), unveränderte Zellzahlen (14 bis 15 Zellen pro cm) und deutliche Vorteile beim Rolltest.

Außerdem erwiesen sich die erfindungsgemäßen PU-Heißweichschaumstoffe als emissionsarm, wenn emissionsoptimierte Additive eingesetzt werden. Dies ist sichtbar in den VOC-Versuchen gemäß DIN EN ISO 16000-9:2008-04. Hierbei zeigt sich in einer emmissionsarmen Formulierung, dass bei Zusatz von Silikon-Additiv 1 die Gesamtemissionen zwar leicht erhöht werden (von 40 $\mu g/m^3$ , vgl. Tabelle 8, auf 130 $\mu g/m^3$, vgl. Tabelle 9), aber dennoch immer noch überaus deutlich unter den üblichen Grenzwerten für den TVOC von 500 $\mu g/m^3$ liegen. Das Silikon-Additiv 1 ist somit auch zum Einsatz in emissionsarmen Formulierungen bestens geeignet.

Die gesamte Vorteilhaftigkeit der Erfindung wurde auch bei viskoelastischen Weichschaumstoffen bestätigt.

Tabelle 8: VOC-Tests gemäß DIN EN ISO 16000-9:2008-04: (Referenz-PU-Heißweichschaumstoff)

| | |
|---|---|
| Probenname: | **Referenz** |
| Instrument: | 7890/5975C |
| Probenvolumen: | 2,000 l |
| Masse Standard: | 0,396 μg |
| Fläche Standard: | 129693683 |

| Retentionszeit [min] | Fläche | Konzentration äquivalent zu Toluol | |
|---|---|---|---|
| 4,6 | 510950 | <1 μg/m$^3$ | |
| 5,1 | 593475 | <1 μg/m$^3$ | |
| 5,9 | 534225 | <1 μg/m$^3$ | |
| 6,4 | 957326 | 1 μg/m$^3$ | Dimethylsilanediol |
| 22,1 | 3381605 | 5 μg/m$^3$ | Ethylhexansäure |
| 23,5 | 2598228 | 4 μg/m$^3$ | Zyklisches Siloxan D5 |
| 25,4 | 940103 | 1 μg/m$^3$ | |
| 29,0 | 8728324 | 13 μg/m$^3$ | verzweigte Alkane |
| 29,4 | 4122469 | 6 μg/m$^3$ | verzweigte Alkane |
| 29,6 | 3680639 | 6 μg/m$^3$ | verzweigte Alkane |
| 29,7 | 2462516 | 4 μg/m$^3$ | verzweigte Alkane |
| 41,3 | 542066 | <1 μg/m$^3$ | |
| | **Summe (TVOC)** | **40 μg/m$^3$** | |

**Siloxanemissionen (gesamt) 5 μg/m$^3$**

Tabelle 9: VOC-Tests gemäß DIN EN ISO 16000-9:2008-04: (Referenz-PU-Heißweichschaumstoff + 1,0 Teile Silikon-Additiv 1 )

| | |
|---|---|
| Probenname: | **Referenz + Silikon-Additiv 1** |
| Instrument: | 7890/5975C |
| Probenvolumen: | 2,000 l |
| Masse Standard: | 0,396 μg |
| Fläche Standard: | 117796486 |

| Retentionszeit [min]T | Fläche | Konzentration äquivalent zu Toluol | |
|---|---|---|---|
| 4,3 | 1241210 | 2 μg/m$^3$ | |
| 4,4 | 904874 | 2 μg/m$^3$ | |
| 4,6 | 813896 | 1 μg/m$^3$ | |
| 5,1 | 803280 | 1 μg/m$^3$ | |
| 6,0 | 1775599 | 3 μg/m$^3$ | Benzol |
| 6,5 | 1756844 | 3 μg/m$^3$ | Dimethylsilanediol |
| 8,8 | 2026275 | 3 μg/m$^3$ | |
| 17,3 | 1528105 | 3 μg/m$^3$ | Zyklisches Siloxan D4 |
| 20,3 | 1676694 | 3 μg/m$^3$ | Lineares Siloxan N4 |
| 22,1 | 3887341 | 7 μg/m$^3$ | Ethylhexansäure |
| 23,5 | 6367115 | 11 μg/m$^3$ | Zyklisches Siloxan D5 |
| 26,5 | 8835334 | 15 μg/m$^3$ | Lineares Siloxan N5 |
| 29,0 | 11993451 | 20 μg/m$^3$ | verzweigte Alkane |
| 29,4 | 5008151 | 8 μg/m$^3$ | verzweigte Alkane |
| 29,6 | 4203748 | 7 μg/m$^3$ | verzweigte Alkane |
| 29,7 | 2903703 | 5 μg/m$^3$ | verzweigte Alkane |
| 31,2 | 3916492 | 7 μg/m$^3$ | Lineares Siloxan N6 |
| 34,3 | 2291055 | 4 μg/m$^3$ | Lineares Siloxan N7 |
| 36,5 | 7455648 | 13 μg/m$^3$ | Lineares Siloxan N8 |

(fortgesetzt)

| Retentionszeit [min]T | Fläche | Konzentration äquivalent zu Toluol | |
|---|---|---|---|
| 38,4 | 4932388 | 8 $\mu g/m^3$ | Lineares Siloxan N9 |
| 42,1 | 1213236 | 2 $\mu g/m^3$ | |
| | **Summe (TVOC)** | **130 $\mu g/m^3$** | |
| | **Siloxanemissionen (gesamt)** | **67 $\mu g/m^3$** | |

## Patentansprüche

**1.** PU-Heißweichschaumstoff-Formkörper, vorzugsweise Matratze und/oder Kissen, wobei der PU-Heißweichschaumstoff durch Umsetzung mindestens einer Polyolkomponente und mindestens einer Isocyanatkomponente in Gegenwart zumindest einer Verbindung der Formel (1a) sowie zumindest einer Verbindung der Formel (1b) und mindestens eines Treibmittels sowie mindestens eines Katalysators erhalten wurde,
wobei

$$[R^1Me_2SiO_{1/2}]_a\ [Me_2SiO_{2/2}]_b\ [R^2MeSiO_{2/2}]_c\ [MeSiO_{3/2}]_d\ [SiO_{4/2}]_e \qquad \text{Formel (1a)}$$

mit

a= 2 bis 10, bevorzugt 2 bis 8, besonders bevorzugt 2 bis 5
b= 25 bis 200, bevorzugt 40 bis 150, besonders bevorzugt 45 bis 120
c= 2 bis 40, bevorzugt 2 bis 30, besonders bevorzugt 3 bis 20
d= 0 bis 10, bevorzugt 0 bis 8, besonders bevorzugt 0 bis 5
e= 0 bis 5, bevorzugt 0 bis 3, besonders bevorzugt 0 bis 2
wobei gilt:

$$a+b+c+d+e > 48$$

$R^1$ = Me oder $R^2$
$R^2$ = gleiche oder verschiedene Polyether, erhältlich aus der Polymerisation von Ethylenoxid, Propylenoxid und/oder anderen Alkylenoxiden wie Butylenoxid oder Styroloxid, bevorzugt Polyether der allgemeinen Formel (c),

$$-\left[CH_2\right]_f-O-\left[C_2H_4O\right]_g-\left[C_3H_6O\right]_h-R^3 \qquad \text{Formel (c)}$$

wobei gilt

f = 0 - 6, bevorzugt 0 - 4, besonders bevorzugt 0 oder 3
g= 0 bis 150, bevorzugt 3 bis 100, besonders bevorzugt 3 bis 70
h=0 bis 150, bevorzugt 0 bis 100, besonders bevorzugt 0 bis 80
wobei gilt

$$g + h > 0$$

$R^3$= OH, Alkyl oder Acetyl, bevorzugt OH, $C_1$ bis $C_6$-Alkyl oder Acetyl, besonders bevorzugt OH, Methyl, Acetyl oder Butyl

und wobei

$$[R^4Me_2SiO_{1/2}]_i\ [Me_2SiO_{2/2}]_j\ [R^5MeSiO_{2/2}]_k\ [MeSiO_{3/2}]_l\ [SiO_{4/2}]_m \qquad \text{Formel (1b)}$$

mit

i= 2 bis 10, bevorzugt 2 bis 8, besonders bevorzugt 2 bis 5
j= 0 bis 20, bevorzugt 0 bis 18, besonders bevorzugt 0 bis 15
k= 0 bis 20, bevorzugt 0 bis 15, besonders bevorzugt 0 bis 10
l= 0 bis 10, bevorzugt 0 bis 8, besonders bevorzugt 0 bis 5
m= 0 bis 5, bevorzugt 0 bis 3, besonders bevorzugt 0 bis 2
wobei gilt:

$$i+j+k+l+m < 20$$

$R^4$ = Me oder $R^5$
$R^5$ = gleiche oder verschiedene Polyether, erhältlich aus der Polymerisation von Ethylenoxid, Propylenoxid und/oder anderen Alkylenoxiden wie Butylenoxid oder Styroloxid, bevorzugt Polyether der allgemeinen Formel (d), oder Alkyl $C_3$ bis $C_{15}$,

$$-\left[CH_2\right]_n-O-\left[C_2H_4O\right]_o-\left[C_3H_6O\right]_p-R^6$$ Formel (d)

wobei gilt

n = 0 - 6, bevorzugt 0 - 4, besonders bevorzugt 0 oder 3
o= 0 bis 100, bevorzugt 0 bis 50, besonders bevorzugt 0 bis 25
p=0 bis 100, bevorzugt 0 bis 50, besonders bevorzugt 0 bis 25
wobei gilt

$$o + p > 0$$

$R^6$= OH, Alkyl oder Acetyl, bevorzugt OH, $C_1$ bis $C_6$-Alkyl oder Acetyl, besonders bevorzugt OH, Methyl, Acetyl oder Butyl.

**2.** PU-Heißweichschaumstoff-Formkörper, vorzugsweise Matratze und/oder Kissen, nach Anspruch 1, **dadurch gekennzeichnet, dass** der Polyurethan-Heißweichschaumstoff eine Porosität von 1,7 bis 10,2 $m^3$/h, vorzugsweise 2,6 bis 7,7 $m^3$/h, insbesondere 2,97 bis 7,22 $m^3$/h hat, wobei die Porosität wie in der Beschreibung offenbart gemessen wird.

**3.** PU-Heißweichschaumstoff-Formkörper, vorzugsweise Matratze und/oder Kissen, nach Anspruch 1 oder 2, **dadurch gekennzeichnet, dass** der Polyurethan-Heißweichschaumstoff eine Rückprallelastizität von 1 bis 50 % aufweist, gemessen nach DIN EN ISO 8307:2008-03, und/oder ein Raumgewicht von 5 bis 150 kg/$m^3$ und/oder eine Porosität von von 1,7 bis 10,2 $m^3$/h, vorzugsweise 2,6 bis 7,7 $m^3$/h, insbesondere 2,97 bis 7,22 $m^3$/h hat, wobei die Porosität wie in der Beschreibung offenbart gemessen wird.

**4.** PU-Heißweichschaumstoff-Formkörper, vorzugsweise Matratze und/oder Kissen, nach einem der Ansprüche 1 bis 3, **dadurch gekennzeichnet, dass** der Polyurethan-Heißweichschaumstoff eine Stauchhärte CLD, 40 % nach DIN EN ISO 3386-1:2015-10 von 0,1 bis 8,0 kPa aufweist.

**5.** PU-Heißweichschaumstoff-Formkörper, vorzugsweise Matratze und/oder Kissen, nach einem der Ansprüche 1 bis 4, **dadurch gekennzeichnet, dass** der Polyurethan-Heißweichschaumstoff eine Stauchhärte CLD, 40 % nach DIN EN ISO 3386-1:2015-10 von 2,0 - 8,0 kPa, und/oder eine Rückprallelastizität von 15 bis 50 %, gemessen nach DIN EN ISO 8307:2008-03, und/oder ein Raumgewicht von 8 bis 80 kg/$m^3$ und/oder eine Porosität von 1,7 bis 10,2 $m^3$/h, vorzugsweise 2,6 bis 7,7 $m^3$/h, insbesondere 2,97 bis 7,22 $m^3$/h hat, wobei die Porosität wie in der Beschreibung offenbart gemessen wird.

**6.** PU-Heißweichschaumstoff-Formkörper, vorzugsweise Matratze und/oder Kissen nach einem der Ansprüche 1 bis 4, **dadurch gekennzeichnet, dass** der Polyurethan-Heißweichschaumstoff ein viskoelastischer Polyurethanweichschaum ist, und vorzugsweise eine Glasübergangstemperatur zwischen -20 und +15 °C und/oder eine Stauchhärte

CLD, 40 % nach DIN EN ISO 3386-1:2015-10 von 0,1 - 5,0 kPa, insbesondere 0,5 - 2,5 kPa, und/oder eine Rückprallelastizität von < 10 %, gemessen nach DIN EN ISO 8307:2008-03, und/oder ein Raumgewicht von 30 bis 130 kg/$m^3$ und/oder eine Porosität von 1,7 bis 10,2 $m^3$/h, vorzugsweise 2,6 bis 7,7 $m^3$/h, insbesondere 2,97 bis 7,22 $m^3$/h hat, wobei die Porosität wie in der Beschreibung offenbart gemessen wird.

**7.** PU-Heißweichschaumstoff-Formkörper, vorzugsweise Matratze, nach einem der Ansprüche 1 bis 6, **dadurch gekennzeichnet, dass** der Formkörper eine Höhe von mindestens 1 cm bis maximal 50 cm aufweist, sowie eine Breite von mindestens 20 cm bis maximal 300 cm, vorzugsweise mindestens 70 cm bis maximal 200 cm, sowie eine Länge von mindestens 20 cm bis maximal 300 cm, vorzugsweise von mindestens 150 cm bis maximal 220 cm.

**8.** PU-Heißweichschaumstoff-Formkörper, vorzugsweise Matratze, nach einem der Ansprüche 1 bis 7, **dadurch gekennzeichnet, dass** der PU-Schaumstoff-Formkörper, bezogen auf sein Ausgangsvolumen um mindestens 20%, vorzugsweise 30%, insbesondere 40% komprimiert wurde und von einem Hilfsmittel, insbesondere Verpackungsmittel, für mindestens 20 Stunden in komprimierter Form gehalten wird.

**9.** PU-Heißweichschaumstoff-Formkörper, vorzugsweise Matratze, nach Anspruch 8, **dadurch gekennzeichnet, dass** der PU-Heißweichschaumstoff-Formkörper komprimiert und vorzugsweise vakuumiert vorliegt, insbesondere eine Rollmatratze ist.

**10.** PU-Heißweichschaumstoff-Formkörper, nach einem der Ansprüche 1 bis 9, **dadurch gekennzeichnet, dass** er unter Mitverwendung von Recycling-Polyolen erhalten wurde.

**11.** Verwendung einer Kombination von zumindest einer Verbindung der Formel (1a) und zumindest einer Verbindung der Formel (1b), (1a) und (1b) wie jeweils in Anspruch 1 definiert, zur Verbesserung der Dimensionswiedererlangung von PU-Heißweichschaumstoff-Formkörpern nach deren Kompression über einen Zeitraum von mindestens 20 Stunden, wobei der PU-Heißweichschaumstoff-Formkörper durch Umsetzung mindestens einer Polyolkomponente und mindestens einer Isocyanatkomponente in Gegenwart mindestens eines Treibmittels sowie mindestens eines Katalysators in Gegenwart zumindest einer Verbindung der Formel (1a) sowie zumindest einer Verbindung der Formel (1b) erhältlich ist,
wobei der Polyurethan-Heißweichschaum eine Porosität von von 1,7 bis 10,2 $m^3$/h, vorzugsweise 2,6 bis 7,7 $m^3$/h, insbesondere 2,97 bis 7,22 $m^3$/h hat, wobei die Porosität wie in der Beschreibung offenbart gemessen wird.

**12.** Verfahren zur Lagerung und/oder zum Transport von PU-Heißweichschaumstoff-Formkörper, vorzugsweise Matratzen und/oder Kissen,
wobei

(a) in einem ersten Schritt ein PU-Heißweichschaumstoff-Formkörper durch Umsetzung mindestens einer Polyolkomponente und mindestens einer Isocyanatkomponente in Gegenwart zumindest einer Verbindung der Formel (1a) sowie zumindest einer Verbindung der Formel (1b), (1a) und (1b) wie jeweils in Anspruch 1 definiert, und mindestens eines Treibmittels sowie mindestens eines Katalysators bereitgestellt wird,
(b) in optionalen Folgeschritten der erhaltene PU-Heißweichschaumstoff-Formkörper ggf. weiter aufbereitet wird, so dass er für den Anwendunsgzweck bereit gemacht ist,
(c) und wobei der (ggf. für den Anwendunsgzweck bereit gemachte) PU-Heißweichschaumstoff-Formkörper in einem finalen Schritt um mindestens 20%, vorzugsweise 30%, insbesondere 40%, bezogen auf sein Ausgangsvolumen, komprimiert und ggf. vakuumiert, und von einem Hilfsmittel, insbesondere Verpackungsmittel, in komprimierter Form gehalten wird, und der Lagerung und/oder dem Transport zugeführt wird,

wobei der Polyurethan-Heißweichschaum vorteilhafterweise eine Porosität von 1,7 bis 10,2 $m^3$/h, vorzugsweise 2,6 bis 7,7 $m^3$/h, insbesondere 2,97 bis 7,22 $m^3$/h hat, wobei die Porosität wie in der Beschreibung offenbart gemessen wird.

**13.** Verfahren nach Anspruch 12, **dadurch gekennzeichnet, dass** in Schritt (a) so viel an Verbindungen mit der Formel (1a) zugegeben wird, dass deren Massenanteil am fertigen Polyurethanschaum von 0,1 bis 5 Gew.-%, bevorzugt von 0,25 bis 3,0 Gew.-%, besonders bevorzugt 0,5 bis 2,0 Gew.-% beträgt, und in Schritt (a) so viel an Verbindungen der Formel (1b) zugegeben wird, dass deren Massenanteil am fertigen Polyurethanschaum von 0,1 bis 5 Gew.-%, bevorzugt von 0,1 bis 2,0 Gew.-%, besonders bevorzugt 0,1 bis 1,5 Gew.-% beträgt.

**14.** Verfahren zur Herstellung von Polyurethan-Heißweichschaum mit einer Porosität von 1,7 bis 10,2 $m^3$/h, vorzugs-

weise 2,6 bis 7,7 $m^3/h$, insbesondere 2,97 bis 7,22 $m^3/h$ hat, wobei die Porosität wie in der Beschreibung offenbart gemessen wird,

durch Umsetzung mindestens einer Polyolkomponente und mindestens einer Isocyanatkomponente in Gegenwart zumindest einer Verbindung der Formel (1a) sowie zumindest einer Verbindung der Formel (1b) und mindestens eines Treibmittels sowie mindestens eines Katalysators,
wobei Formeln (1a) und (1b) wie nachfolgend definert sind:

$$[R^1Me_2SiO_{1/2}]_a\ [Me_2SiO_{2/2}]_b\ [R^2MeSiO_{2/2}]_c\ [MeSiO_{3/2}]_d\ [SiO_{4/2}]_e \qquad \text{Formel (1a)}$$

mit

a= 2 bis 10, bevorzugt 2 bis 8, besonders bevorzugt 2 bis 5
b= 25 bis 200, bevorzugt 40 bis 150, besonders bevorzugt 45 bis 120
c= 2 bis 40, bevorzugt 2 bis 30, besonders bevorzugt 3 bis 20
d= 0 bis 10, bevorzugt 0 bis 8, besonders bevorzugt 0 bis 5
e= 0 bis 5, bevorzugt 0 bis 3, besonders bevorzugt 0 bis 2
wobei gilt:

$$a+b+c+d+e > 48$$

$R^1$ = Me oder $R^2$
$R^2$ = gleiche oder verschiedene Polyether, erhältlich aus der Polymerisation von Ethylenoxid, Propylenoxid und/oder anderen Alkylenoxiden wie Butylenoxid oder Styroloxid, bevorzugt Polyether der allgemeinen Formel (c),

$$-\left[CH_2\right]_f-O-\left[C_2H_4O\right]_g-\left[C_3H_6O\right]_h-R^3 \qquad \text{Formel (c)}$$

wobei gilt

f = 0 - 6, bevorzugt 0 - 4, besonders bevorzugt 0 oder 3
g= 0 bis 150, bevorzugt 3 bis 100, besonders bevorzugt 3 bis 70
h=0 bis 150, bevorzugt 0 bis 100, besonders bevorzugt 0 bis 80
wobei gilt

$$g + h > 0$$

$R^3$= OH, Alkyl oder Acetyl, bevorzugt OH, $C_1$ bis $C_6$-Alkyl oder Acetyl, besonders bevorzugt OH, Methyl, Acetyl oder Butyl

und wobei

$$[R^4Me_2SiO_{1/2}]_i\ [Me_2SiO_{2/2}]_j\ [R^5MeSiO_{2/2}]_k\ [MeSiO_{3/2}]_l\ [SiO_{4/2}]_m \qquad \text{Formel (1b)}$$

mit

i= 2 bis 10, bevorzugt 2 bis 8, besonders bevorzugt 2 bis 5
j= 0 bis 20, bevorzugt 0 bis 18, besonders bevorzugt 0 bis 15
k= 0 bis 20, bevorzugt 0 bis 15, besonders bevorzugt 0 bis 10
l= 0 bis 10, bevorzugt 0 bis 8, besonders bevorzugt 0 bis 5
m= 0 bis 5, bevorzugt 0 bis 3, besonders bevorzugt 0 bis 2
wobei gilt:

$$i+j+k+l+m < 20$$

$R^4$ = Me oder $R^5$
$R^5$ = gleiche oder verschiedene Polyether, erhältlich aus der Polymerisation von Ethylenoxid, Propylenoxid und/oder anderen Alkylenoxiden wie Butylenoxid oder Styroloxid, bevorzugt Polyether der allgemeinen Formel (d), oder Alkyl $C_3$ bis $C_{15}$,

$$-[CH_2]_n-O-[C_2H_4O]_o-[C_3H_6O]_p-R^6 \quad \text{Formel (d)}$$

wobei gilt

n = 0 - 6, bevorzugt 0 - 4, besonders bevorzugt 0 oder 3
o= 0 bis 100, bevorzugt 0 bis 50, besonders bevorzugt 0 bis 25
p=0 bis 100, bevorzugt 0 bis 50, besonders bevorzugt 0 bis 25
wobei gilt

$$o + p > 0$$

$R^6$= OH, Alkyl oder Acetyl, bevorzugt OH, $C_1$ bis $C_6$-Alkyl oder Acetyl, besonders bevorzugt OH, Methyl, Acetyl oder Butyl,

insbesondere unter Mitverwendung von Recycling-Polyolen.

**15.** Verwendung von Polyurethan-Heißweichschaumstoff in Matratzen und/oder Kissen, insbesondere Matratzen, wobei der Polyurethan-Heißweichschaumstoff durch Umsetzung mindestens einer Polyolkomponente und mindestens einer Isocyanatkomponente in Gegenwart zumindest einer Verbindung der Formel (1a) sowie zumindest einer Verbindung der Formel (1b), (1a) und (1b) wie jeweils in Anspruch 1 definiert, und mindestens eines Treibmittels sowie mindestens eines Katalysators erhalten wurde,

vorzugsweise zur Bereitstellung von (vorzugsweise komprimierten) Matratzen und/oder Kissen mit verbesserter Dimensionswiedererlangung nach Kompression über einen Zeitraum von mindestens 20 Stunden,
insbesondere mit verbessertem Emissionsverhalten,
wobei der Polyurethan-Heißweichschaumstoff vorteilhafterweise eine Porosität von von 1,7 bis 10,2 $m^3$/h, vorzugsweise 2,6 bis 7,7 $m^3$/h, insbesondere 2,97 bis 7,22 $m^3$/h hat, wobei die Porosität wie in der Beschreibung offenbart gemessen wird.

**16.** Mischung, umfassend zumindest eine Verbindung der Formel (1b) sowie zumindest eine Verbindung der Formel (1a), (1a) und (1b) wie jeweils in Anspruch 1 definiert, und optional Glykole, Polyether, organische Ester und/oder andere für die Zwecke der PU-Weichschaumstoffherstellung geeignete Lösemittel.

## Claims

**1.** Shaped hot-cure flexible PU foam article, preferably mattress and/or cushion, wherein the hot-cure flexible PU foam has been obtained by reaction of at least one polyol component and at least one isocyanate component in the presence of at least one compound of formula (1a) and at least one compound of formula (1b) and at least one blowing agent and at least one catalyst,
where

$$[R^1Me_2SiO_{1/2}]_a\ [Me_2SiO_{2/2}]_b\ [R^2MeSiO_{2/2}]_c\ [MeSiO_{3/2}]_d\ [SiO_{4/2}]_e \quad \text{Formula (1a)}$$

with

a = 2 to 10, preferably 2 to 8, more preferably 2 to 5
b = 25 to 200, preferably 40 to 150, more preferably 45 to 120
c = 2 to 40, preferably 2 to 30, more preferably 3 to 20
d = 0 to 10, preferably 0 to 8, more preferably 0 to 5
e = 0 to 5, preferably 0 to 3, more preferably 0 to 2

where:

$$a+b+c+d+e > 48$$

$R^1$ = Me or $R^2$
$R^2$ = identical or different polyethers obtainable from the polymerization of ethylene oxide, propylene oxide and/or other alkylene oxides such as butylene oxide or styrene oxide, preferably polyethers of the general formula (c),

$$-[CH_2]_f-O-[C_2H_4O]_g-[C_3H_6O]_h-R^3 \quad \text{Formula (c)}$$

where

f = 0-6, preferably 0-4, more preferably 0 or 3
g = 0 to 150, preferably 3 to 100, more preferably 3 to 70
h = 0 to 150, preferably 0 to 100, more preferably 0 to 80
where

$$g + h > 0$$

$R^3$= OH, alkyl or acetyl, preferably OH, $C_1$ to $C_6$-alkyl or acetyl, more preferably OH, methyl, acetyl or butyl and where

$$[R^4Me_2SiO_{1/2}]_i\ [Me_2SiO_{2/2}]_j\ [R^5MeSiO_{2/2}]_k\ [MeSiO_{3/2}]_l\ [SiO_{4/2}]_m \quad \text{Formula (1b)}$$

with

i = 2 to 10, preferably 2 to 8, more preferably 2 to 5
j = 0 to 20, preferably 0 to 18, more preferably 0 to 15
k = 0 to 20, preferably 0 to 15, more preferably 0 to 10
1 = 0 to 10, preferably 0 to 8, more preferably 0 to 5
m = 0 to 5, preferably 0 to 3, more preferably 0 to 2
where:

$$i+j+k+l+m < 20$$

$R^4$ = Me or $R^5$
$R^5$ = identical or different polyethers obtainable from the polymerization of ethylene oxide, propylene oxide and/or other alkylene oxides such as butylene oxide or styrene oxide, preferably polyethers of the general formula (d), or alkyl $C_3$ to $C_{15}$,

$$-[CH_2]_n-O-[C_2H_4O]_o-[C_3H_6O]_p-R^6 \quad \text{Formula (d)}$$

where

n = 0-6, preferably 0-4, more preferably 0 or 3
o = 0 to 100, preferably 0 to 50, more preferably 0 to 25
p = 0 to 100, preferably 0 to 50, more preferably 0 to 25
where

$$o + p > 0$$

$R^6$= OH, alkyl or acetyl, preferably OH, $C_1$ to $C_6$-alkyl or acetyl, more preferably OH, methyl, acetyl or butyl.

2. Shaped hot-cure flexible PU foam article, preferably mattress and/or cushion, according to Claim 1, **characterized in that** the hot-cure flexible polyurethane foam has a porosity of 1.7 to 10.2 $m^3/h$, preferably 2.6 to 7.7 $m^3/h$, especially 2.97 to 7.22 $m^3/h$, where porosity is measured as disclosed in the description.

3. Shaped hot-cure flexible PU foam article, preferably mattress and/or cushion, according to Claim 1 or 2, **characterized in that** the hot-cure flexible polyurethane foam has a rebound resilience of 1% to 50%, measured in accordance with DIN EN ISO 8307:2008-03, and/or a foam density of 5 to 150 $kg/m^3$ and/or a porosity of 1.7 to 10.2 $m^3/h$, preferably 2.6 to 7.7 $m^3/h$, especially 2.97 to 7.22 $m^3/h$, where porosity is measured as disclosed in the description.

4. Shaped hot-cure flexible PU foam article, preferably mattress and/or cushion, according to any of Claims 1 to 3, **characterized in that** the hot-cure flexible polyurethane foam has a compressive strength CLD, 40% in accordance with DIN EN ISO 3386-1:2015-10, of 0.1 to 8.0 kPa.

5. Shaped hot-cure flexible PU foam article, preferably mattress and/or cushion, according to any of Claims 1 to 4, **characterized in that** the hot-cure flexible polyurethane foam has a compressive strength CLD, 40% in accordance with DIN EN ISO 3386-1:2015-10, of 2.0-8.0 kPa and/or a rebound resilience of 15-50%, measured in accordance with DIN EN ISO 8307:2008-03, and/or a foam density of 8 to 80 $kg/m^3$ and/or a porosity of 1.7 to 10.2 $m^3/h$, preferably 2.6 to 7.7 $m^3/h$, especially 2.97 to 7.22 $m^3/h$, where porosity is measured as disclosed in the description.

6. Shaped hot-cure flexible PU foam article, preferably mattress and/or cushion, according to any of Claims 1 to 4, **characterized in that** the hot-cure flexible polyurethane foam is a viscoelastic flexible polyurethane foam and preferably has a glass transition temperature between -20°C and +15°C and/or a compressive strength CLD, 40% in accordance with DIN EN ISO 3386-1:2015-10, of 0.1 - 5.0 kPa, in particular 0.5 - 2.5 kPa, and/or a rebound resilience of < 10%, measured in accordance with DIN EN ISO 8307:2008-03, and/or a foam density of 30 to 130 $kg/m^3$ and/or a porosity of 1.7 to 10.2 $m^3/h$, preferably 2.6 to 7.7 $m^3/h$, especially 2.97 to 7.22 $m^3/h$, where porosity is measured as disclosed in the description.

7. Shaped hot-cure flexible PU foam article, preferably mattress, according to any of Claims 1 to 6, **characterized in that** the shaped article has a height of from at least 1 cm to not more than 50 cm and a width of from at least 20 cm to not more than 300 cm, preferably from at least 70 cm to not more than 200 cm, and a length of from at least 20 cm to not more than 300 cm, preferably from at least 150 cm to not more than 220 cm.

8. Shaped hot-cure flexible PU foam article, preferably mattress, according to any of Claims 1 to 7, **characterized in that** based on its starting volume the shaped PU foam article is compressed by at least 20%, preferably 30%, especially 40%, and kept in compressed form by an auxiliary means, especially packaging means, for at least 20 hours.

9. Shaped hot-cure flexible PU foam article, preferably mattress, according to Claim 8, **characterized in that** the shaped hot-cure flexible PU foam article is in a compressed and preferably a vacuum-packed state, and is especially a roll-up mattress.

10. Shaped hot-cure flexible PU foam article according to any of Claims 1 to 9, **characterized in that** it has been obtained with additional use of recycled polyols.

11. Use of a combination of at least one compound of formula (1a) and at least one compound of formula (1b), with (1a) and (1b) each as defined in Claim 1, for improving the dimensional recovery of shaped hot-cure flexible PU foam articles after compression thereof over a period of at least 20 hours, wherein the shaped hot-cure flexible PU foam article is obtainable by reaction of at least one polyol component and at least one isocyanate component in the presence of at least one blowing agent and of at least one catalyst in the presence of at least one compound of formula (1a) and at least one compound of formula (1b),
where the hot-cure flexible polyurethane foam has a porosity of 1.7 to 10.2 $m^3/h$, preferably 2.6 to 7.7 $m^3/h$, especially 2.97 to 7.22 $m^3/h$, where porosity is measured as disclosed in the description.

12. Process for storing and/or for transporting shaped hot-cure flexible PU foam articles, preferably mattresses and/or cushions,
where

(a) in a first step a shaped hot-cure flexible PU foam article is provided by reaction of at least one polyol component and at least one isocyanate component in the presence of at least one compound of formula (1a) and at least one compound of formula (1b), with (1a) and (1b) each as defined in Claim 1, and of at least one blowing agent and at least one catalyst,
(b) in optional subsequent steps the shaped hot-cure flexible PU foam article obtained may optionally be subjected to further processing to prepare it for the application,
(c) and wherein in a final step the shaped hot-cure flexible PU foam article (optionally prepared for the application) is compressed by at least 20%, preferably 30%, especially 40%, based on its starting volume, and optionally vacuum-packed and kept in compressed form by auxiliary means, in particular packaging means, and sent for storage and/or transport,

where the hot-cure flexible polyurethane foam advantageously has a porosity of 1.7 to 10.2 $m^3/h$, preferably 2.6 to 7.7 $m^3/h$, especially 2.97 to 7.22 $m^3/h$, where porosity is measured as disclosed in the description.

**13.** Process according to Claim 12, **characterized in that** a sufficient amount of compounds having the formula (1a) is added in step (a) that the proportion by mass thereof in the finished polyurethane foam is from 0.1% to 5% by weight, preferably from 0.25% to 3.0% by weight, more preferably 0.5% to 2.0% by weight, and a sufficient amount of compounds of formula (1b) is added in step (a) that the proportion by mass thereof in the finished polyurethane foam is from 0.1% to 5% by weight, preferably from 0.1% to 2.0% by weight, more preferably 0.1% to 1.5% by weight.

**14.** Process for producing hot-cure flexible polyurethane foam having a porosity of 1.7 to 10.2 $m^3/h$, preferably 2.6 to 7.7 $m^3/h$, especially 2.97 to 7.22 $m^3/h$, where porosity is measured as disclosed in the description,

by reaction of at least one polyol component and at least one isocyanate component in the presence of at least one compound of formula (1a) and at least one compound of formula (1b) and at least one blowing agent and at least one catalyst,
where formulae (1a) and (1b) are defined below:

$$[R^1Me_2SiO_{1/2}]_a\ [Me_2SiO_{2/2}]_b\ [R^2MeSiO_{2/2}]_c\ [MeSiO_{3/2}]_d\ [SiO_{/4/2}]_e \qquad \text{Formula (1a)}$$

with

a = 2 to 10, preferably 2 to 8, more preferably 2 to 5
b = 25 to 200, preferably 40 to 150, more preferably 45 to 120
c = 2 to 40, preferably 2 to 30, more preferably 3 to 20
d = 0 to 10, preferably 0 to 8, more preferably 0 to 5
e = 0 to 5, preferably 0 to 3, more preferably 0 to 2
where:

$$a+b+c+d+e > 48$$

$R^1$ = Me or $R^2$
$R^2$ = identical or different polyethers obtainable from the polymerization of ethylene oxide, propylene oxide and/or other alkylene oxides such as butylene oxide or styrene oxide, preferably polyethers of the general formula (c),

$$-[CH_2]_f-O-[C_2H_4O]_g-[C_3H_6O]_h-R^3 \qquad \text{Formula (c)}$$

where

f = 0-6, preferably 0-4, more preferably 0 or 3
g = 0 to 150, preferably 3 to 100, more preferably 3 to 70
h = 0 to 150, preferably 0 to 100, more preferably 0 to 80
where

$$g + h > 0$$

$R^3$= OH, alkyl or acetyl, preferably OH, $C_1$ to $C_6$-alkyl or acetyl, more preferably OH, methyl, acetyl or butyl
and where

$$[R^4Me_2SiO_{1/2}]_i\ [Me_2SiO_{2/2}]_j\ [R^5MeSiO_{2/2}]_k\ [MeSiO_{3/2}]_l\ [SiO_{4/2}]_m$$
Formula (1b)

with

i = 2 to 10, preferably 2 to 8, more preferably 2 to 5
j = 0 to 20, preferably 0 to 18, more preferably 0 to 15
k = 0 to 20, preferably 0 to 15, more preferably 0 to 10
l = 0 to 10, preferably 0 to 8, more preferably 0 to 5
m = 0 to 5, preferably 0 to 3, more preferably 0 to 2
where:

$$i+j+k+l+m < 20$$

$R^4$ = Me or $R^5$
$R^5$ = identical or different polyethers obtainable from the polymerization of ethylene oxide, propylene oxide and/or other alkylene oxides such as butylene oxide or styrene oxide, preferably polyethers of the general formula (d), or alkyl $C_3$ to $C_{15}$,

$$-[CH_2]_n-O-[C_2H_4O]_o-[C_3H_6O]_p-R^6$$ Formula (d)

where

n = 0-6, preferably 0-4, more preferably 0 or 3
o = 0 to 100, preferably 0 to 50, more preferably 0 to 25
p = 0 to 100, preferably 0 to 50, more preferably 0 to 25
where

$$o + p > 0$$

$R^6$= OH, alkyl or acetyl, preferably OH, $C_1$ to $C_6$-alkyl or acetyl, more preferably OH, methyl, acetyl or butyl, especially with additional use of recycled polyols.

**15.** Use of hot-cure flexible polyurethane foam in mattresses and/or cushions, especially mattresses, wherein the hot-cure flexible polyurethane foam has been obtained by reaction of at least one polyol component and at least one isocyanate component in the presence of at least one compound of formula (1a) and at least one compound of formula (1b), with (1a) and (1b) each as defined in Claim 1, and of at least one blowing agent and at least one catalyst,

preferably for provision of (preferably compressed) mattresses and/or cushions having improved dimensional recovery after compression over a period of at least 20 hours,
especially having improved emissions characteristics,
where the hot-cure flexible polyurethane foam advantageously has a porosity of 1.7 to 10.2 $m^3/h$, preferably 2.6 to 7.7 $m^3/h$, especially 2.97 to 7.22 $m^3/h$, where porosity is measured as disclosed in the description.

**16.** Mixture comprising at least one compound of the formula (1b) and at least one compound of the formula (1a), with (1a) and (1b) each as defined in Claim 1, and optionally glycols, polyethers, organic esters and/or other solvents suitable for the purposes of flexible PU foam production.

## Revendications

**1.** Corps moulé en mousse souple de PU à chaud, de préférence matelas et/ou coussins, la mousse souple de PU à chaud ayant été obtenue par mise en réaction d'au moins un composant polyol et d'au moins un composant isocyanate en présence d'au moins un composé de formule (1a) ainsi que d'au moins un composé de formule (1b) et d'au moins un agent porogène ainsi que d'au moins un catalyseur,
dans lequel

$$[R^1Me_2SiO_{1/2}]_a\ [Me_2SiO_{2/2}]_b\ [R^2MeSiO_{2/2}]_c\ [MeSiO_{3/2}]_d\ [SiO_{4/2}]_e \qquad \text{Formule (1a)}$$

dans laquelle

a = 2 à 10, de préférence 2 à 8, de façon particulièrement préférée 2 à 5,
b = 25 à 200, de préférence 40 à 150, de façon particulièrement préférée 45 à 120,
c = 2 à 40, de préférence 2 à 30, de façon particulièrement préférée 3 à 20,
d = 0 à 10, de préférence 0 à 8, de façon particulièrement préférée 0 à 5,
e = 0 à 5, de préférence 0 à 3, de façon particulièrement préférée 0 à 2,
où il s'applique que :

$$a+b+c+d+e > 48$$

$R^1$ = Me ou $R^2$
$R^2$ = des polyéthers identiques ou différents, pouvant être obtenus par la polymérisation d'oxyde d'éthylène, d'oxyde de propylène et/ou d'autres oxydes d'alkylène tels que l'oxyde de butylène ou l'oxyde de styrène, de préférence des polyéthers de formule générale (c),

$$-\!\!\left[CH_2\right]_f\!-O-\!\left[C_2H_4O\right]_g\!-\!\left[C_3H_6O\right]_h\!-R^3 \qquad \text{Formule (c)}$$

où il s'applique que :

f = 0 - 6, de préférence 0 - 4, de façon particulièrement préférée 0 ou 3
g = 0 à 150, de préférence 3 à 100, de façon particulièrement préférée 3 à 70,
h = 0 à 150, de préférence 0 à 100, de façon particulièrement préférée 0 à 80,
où il s'applique que :

$$g + h > 0$$

$R^3$ = OH, alkyle ou acétyle, de préférence OH, alkyle en $C_1$-$C_6$ ou acétyle, de façon particulièrement préférée OH, méthyle, acétyle ou butyle
et où

$$[R^4Me_2SiO_{1/2}]_i\ [Me_2SiO_{2/2}]_j\ [R^5MeSiO_{2/2}]_k\ [MeSiO_{3/2}]_l\ [SiO_{4/2}]_m \qquad \text{Formule (1b)}$$

dans laquelle

i = 2 à 10, de préférence 2 à 8, de façon particulièrement préférée 2 à 5,
j = 0 à 20, de préférence 0 à 18, de façon particulièrement préférée 0 à 15,
k = 0 à 20, de préférence 0 à 15, de façon particulièrement préférée 0 à 10,
l = 0 à 10, de préférence 0 à 8, de façon particulièrement préférée 0 à 5,
m = 0 à 5, de préférence 0 à 3, de façon particulièrement préférée 0 à 2,
où il s'applique que :

$$i+j+k+l+m < 20$$

$R^4$ = Me ou $R^5$

$R^5$ = des polyéthers identiques ou différents, pouvant être obtenus par la polymérisation d'oxyde d'éthylène, d'oxyde de propylène et/ou d'autres oxydes d'alkylène tels que l'oxyde de butylène ou l'oxyde de styrène, de préférence des polyéthers de formule générale (d), ou alkyle en $C_3$-$C_{15}$,

$$-\left[CH_2\right]_n-O-\left[C_2H_4O\right]_o-\left[C_3H_6O\right]_p-R^6$$

Formule (d)

où il s'applique que :

n = 0 - 6, de préférence 0 - 4, de façon particulièrement préférée 0 ou 3
o = 0 à 100, de préférence 0 à 50, de façon particulièrement préférée 0 à 25,
p = 0 à 100, de préférence 0 à 50, de façon particulièrement préférée 0 à 25,
où il s'applique que :

$$o + p > 0$$

$R^6$ = OH, alkyle ou acétyle, de préférence OH, alkyle en $C_1$-$C_6$ ou acétyle, de façon particulièrement préférée OH, méthyle, acétyle ou butyle.

2. Corps moulé en mousse souple de PU à chaud, de préférence matelas et/ou coussin, selon la revendication 1, **caractérisé en ce que** la mousse souple de polyuréthane à chaud a une porosité de 1,7 à 10,2 $m^3$/h, de préférence 2,6 à 7,7 $m^3$/h, en particulier 2,97 à 7,22 $m^3$/h, la porosité étant mesurée comme révélé dans la description.

3. Corps moulé en mousse souple de PU à chaud, de préférence matelas et/ou coussin, selon la revendication 1 ou 2, **caractérisé en ce que** la mousse souple de polyuréthane à chaud a une résilience de 1 à 50 %, mesurée selon DIN EN ISO 8307:2008-03, et/ou un poids spécifique de 5 à 150 kg/$m^3$ et/ou une porosité de 1,7 à 10,2 $m^3$/h, de préférence 2,6 à 7,7 $m^3$/h, en particulier 2,97 à 7,22 $m^3$/h, la porosité étant mesurée comme révélé dans la description.

4. Corps moulé en mousse souple de PU à chaud, de préférence matelas et/ou coussins, selon l'une quelconque des revendications 1 à 3, **caractérisé en ce que** la mousse souple de polyuréthane à chaud présente une dureté à la compression CLD, 40 %, selon DIN EN ISO 3386-1:2015-10, de 0,1 à 8,0 kPa.

5. Corps moulé en mousse souple de PU à chaud, de préférence matelas et/ou coussin, selon l'une quelconque des revendications 1 à 4, **caractérisé en ce que** la mousse souple de polyuréthane à chaud a une dureté à la compression CLD, 40 %, selon DIN EN ISO 3386-1:2015-10, de 2,0 - 8,0 kPa, et/ou une résilience de 15 à 50 %, mesurée selon DIN EN ISO 8307:2008-03, et/ou un poids spécifique de 8 à 80 kg/$m^3$ et/ou une porosité de 1,7 à 10,2 $m^3$/h, de préférence 2,6 à 7,7 $m^3$/h, en particulier 2,97 à 7,22 $m^3$/h, la porosité étant mesurée comme révélé dans la description.

6. Corps moulé en mousse souple de PU à chaud, de préférence matelas et/ou coussin, selon l'une quelconque des revendications 1 à 4, **caractérisé en ce que** la mousse souple de polyuréthane à chaud est une mousse souple de polyuréthane viscoélastique, et a de préférence une température de transition vitreuse comprise entre -20 et +15 °C et/ou une dureté à la compression CLD, 40 %, selon DIN EN ISO 3386-1:2015-10, de 0,1 - 5,0 kPa, en particulier 0,5 - 2,5 kPa, et/ou une résilience de < 10 %, mesurée selon DIN EN ISO 8307:2008-03, et/ou un poids spécifique de 30 à 130 kg/$m^3$ et/ou une porosité de 1,7 à 10,2 $m^3$/h, de préférence 2,6 à 7,7 $m^3$/h, en particulier 2,97 à 7,22 $m^3$/h, la porosité étant mesurée comme révélé dans la description.

7. Corps moulé en mousse souple de PU à chaud, de préférence matelas, selon l'une quelconque des revendications 1 à 6, **caractérisé en ce que** le corps moulé présente une hauteur d'au moins 1 cm à au maximum 50 cm, ainsi qu'une largeur d'au moins 20 cm à au maximum 300 cm, de préférence d'au moins 70 cm à au maximum 200 cm, ainsi qu'une longueur d'au moins 20 cm à au maximum 300 cm, de préférence d'au moins 150 cm à au maximum 220 cm.

8. Corps moulé en mousse souple de PU à chaud, de préférence matelas, selon l'une quelconque des revendications 1 à 7, **caractérisé en ce que** le corps moulé de mousse de PU a été comprimé d'au moins 20 %, de préférence 30 %, en particulier 40 %, par rapport à son volume initial, et est maintenu sous forme comprimée pendant au moins 20 heures

par un moyen auxiliaire, en particulier un moyen d'emballage.

**9.** Corps moulé en mousse souple de PU à chaud, de préférence matelas, selon la revendication 8, **caractérisé en ce que** la mousse souple de PU à chaud se trouve comprimée et de préférence mise sous vide, en particulier est un matelas roulé.

**10.** Corps moulé en mousse souple de PU à chaud, selon l'une quelconque des revendications 1 à 9, **caractérisé en ce qu'**il a été obtenu avec utilisation conjointe de polyols de recyclage.

**11.** Utilisation d'une association d'au moins un composé de formule (1a) et d'au moins un composé de formule (1b), les formules (1a) et(1b) étant telles que définies chacune dans la revendication 1, pour l'amélioration du rétablissement des dimensions de corps moulés en mousse souple de PU à chaud, après leur compression pendant une durée d'au moins 20 heures, le corps moulés en mousse souple de PU à chaud pouvant être obtenu par mise en réaction d'au moins un composant polyol et d'au moins un composant isocyanate en présence d'au moins un agent porogène ainsi que d'au moins un catalyseur, en présence d'au moins un composé de formule (1a) ainsi que d'au moins un composé de formule (1b),
la mousse de polyuréthane souple à chaud ayant une porosité de 1,7 à 10,2 $m^3$/h, de préférence 2,6 à 7,7 $m^3$/h, en particulier 2,97 à 7,22 $m^3$/h, la porosité étant mesurée comme révélé dans la description.

**12.** Procédé pour le stockage et/ou le transport de corps moulés en mousse souple de PU à chaud, matelas et/ou coussins de préférence,
dans lequel

(a) dans une première étape un corps moulé en mousse souple de PU à chaud est préparé par mise en réaction d'au moins un composant polyol et d'au moins un composant isocyanate en présence d'au moins un composé de formule (1a) ainsi que d'au moins un composé de formule (1b), les formules (1a) et (1b) étant telles que définies chacune dans la revendication 1, et d'au moins un agent porogène ainsi que d'au moins un catalyseur,
(b) dans les étapes optionnelles suivantes, le corps moulé en mousse souple de PU à chaud est éventuellement soumis à un post-traitement de manière à être préparé pour l'utilisation prévue,
(c) et dans lequel le corps moulé en mousse souple de PU à chaud (éventuellement déjà préparé pour l'utilisation prévue) est, dans une étape finale, comprimé d'au moins 20 %, de préférence 30 %, en particulier 40 %, par rapport à son volume initial, et éventuellement mis sous vide, et maintenu sous forme comprimée par un moyen auxiliaire, en particulier un moyen d'emballage, et envoyé au stockage et/ou au transport,

la mousse de polyuréthane souple à chaud ayant une porosité de 1,7 à 10,2 $m^3$/h, de préférence 2,6 à 7,7 $m^3$/h, en particulier 2,97 à 7,22 $m^3$/h, la porosité étant mesurée comme révélé dans la description.

**13.** Procédé selon la revendication 12,, **caractérisé en ce que** dans l'étape (a) est ajoutée une quantité suffisante de composés de formule (1a) pour que leur proportion en masse dans la mousse de polyuréthane finale soit de 0,1 à 5 % en poids, de préférence de 0,25 à 3,0 % en poids, de façon particulièrement préférée 0,5 à 2,0 % en poids, et dans l'étape (a) est ajoutée une quantité suffisante de composés de formule (1b) pour que leur proportion en masse dans la mousse de polyuréthane finale soit de 0,1 à 5 % en poids, de préférence de 0,1 à 2,0 % en poids, de façon particulièrement préférée 0,1 à 1,5 % en poids.

**14.** Procédé pour la production de mousse de polyuréthane souple à chaud ayant une porosité de 1,7 à 10,2 $m^3$/h, de préférence 2,6 à 7,7 $m^3$/h, en particulier 2,97 à 7,22 $m^3$/h, la porosité étant mesurée comme révélé dans la description.

par mise en réaction d'au moins un composant polyol et d'au moins un composant isocyanate en présence d'au moins un composé de formule (1a) ainsi que d'au moins un composé de formule (1b), et d'au moins un agent porogène ainsi que d'au moins un catalyseur,
les formules (1a) et (1b) étant définies comme suit :

$$[R^1Me_2SiO_{1/2}]_a\ [Me_2SiO_{2/2}]_b\ [R^2MeSiO_{2/2}]_c\ [MeSiO_{3/2}]_d\ [SiO_{4/2}]_e \qquad \text{Formule (1a)}$$

dans laquelle

a = 2 à 10, de préférence 2 à 8, de façon particulièrement préférée 2 à 5,
b = 25 à 200, de préférence 40 à 150, de façon particulièrement préférée 45 à 120,

c = 2 à 40, de préférence 2 à 30, de façon particulièrement préférée 3 à 20,
d = 0 à 10, de préférence 0 à 8, de façon particulièrement préférée 0 à 5,
e = 0 à 5, de préférence 0 à 3, de façon particulièrement préférée 0 à 2,
où il s'applique que :

$$a+b+c+d+e > 48$$

$R^1$ = Me ou $R^2$
$R^2$ = des polyéthers identiques ou différents, pouvant être obtenus par la polymérisation d'oxyde d'éthylène,
d'oxyde de propylène et/ou d'autres oxydes d'alkylène tels que l'oxyde de butylène ou l'oxyde de styrène, de préférence des polyéthers de formule générale (c),

$$-[CH_2]_f-O-[C_2H_4O]_g-[C_3H_6O]_h-R^3$$

Formule (c)

où il s'applique que :

f = 0 - 6, de préférence 0 - 4, de façon particulièrement préférée 0 ou 3
g = 0 à 150, de préférence 3 à 100, de façon particulièrement préférée 3 à 70,
h = 0 à 150, de préférence 0 à 100, de façon particulièrement préférée 0 à 80,
où il s'applique que :

$$g + h > 0$$

$R^3$ = OH, alkyle ou acétyle, de préférence OH, alkyle en $C_1$-$C_6$ ou acétyle, de façon particulièrement préférée OH, méthyle, acétyle ou butyle
et où

$$[R^4Me_2SiO_{1/2}]_i\ [Me_2SiO_{2/2}]_j\ [R^5MeSiO_{2/2}]_k\ [MeSiO_{3/2}]_l\ [SiO_{4/2}]_m$$

Formule (1b)

dans laquelle

i = 2 à 10, de préférence 2 à 8, de façon particulièrement préférée 2 à 5,
j = 0 à 20, de préférence 0 à 18, de façon particulièrement préférée 0 à 15,
k = 0 à 20, de préférence 0 à 15, de façon particulièrement préférée 0 à 10,
l = 0 à 10, de préférence 0 à 8, de façon particulièrement préférée 0 à 5,
m = 0 à 5, de préférence 0 à 3, de façon particulièrement préférée 0 à 2,
où il s'applique que :

$$i+j+k+l+m < 20$$

$R^4$ = Me ou $R^5$
$R^5$ = des polyéthers identiques ou différents, pouvant être obtenus par la polymérisation d'oxyde d'éthylène, d'oxyde de propylène et/ou d'autres oxydes d'alkylène tels que l'oxyde de butylène ou l'oxyde de styrène, de préférence des polyéthers de formule générale (d), ou alkyle en $C_3$-$C_{15}$,

$$-[CH_2]_n-O-[C_2H_4O]_o-[C_3H_6O]_p-R^6$$

Formule (d)

où il s'applique que :

n = 0 - 6, de préférence 0 - 4, de façon particulièrement préférée 0 ou 3
o = 0 à 100, de préférence 0 à 50, de façon particulièrement préférée 0 à 25,
p = 0 à 100, de préférence 0 à 50, de façon particulièrement préférée 0 à 25,
où il s'applique que :

$$o + p > 0$$

$R^6$ = OH, alkyle ou acétyle, de préférence OH, alkyle en $C_1$-$C_6$ ou acétyle, de façon particulièrement préférée OH, méthyle, acétyle ou butyle.
en particulier avec utilisation conjointe de polyols de recyclage.

**15.** Utilisation de mousse souple de polyuréthane à chaud dans des matelas et/ou coussins, matelas en particulier, dans laquelle la mousse souple de polyuréthane à chaud a été obtenue par mise en réaction d'au moins un composant polyol et d'au moins un composant isocyanate en présence d'au moins un composé de formule (1a) ainsi que d'au moins un composé de formule (1b), les formules (1a) et(1b) étant telles que définies chacune dans la revendication 1, et d'au moins un agent porogène ainsi que d'au moins un catalyseur,

de préférence pour la production de matelas et/ou coussins (de préférence comprimés) à rétablissement amélioré des dimensions après compression pendant une durée d'au moins 20 heures,
en particulier à comportement d'émission amélioré,
la mousse de polyuréthane souple à chaud ayant une porosité de 1,7 à 10,2 $m^3$/h, de préférence 2,6 à 7,7 $m^3$/h, en particulier 2,97 à 7,22 $m^3$/h, la porosité étant mesurée comme révélé dans la description.

**16.** Mélange, comprenant au moins un composé de formule (1b) ainsi qu'au moins un composé de formule (1a), les formules (1a) et (1b) étant telles que définies chacune dans la revendication 1, et en option des glycols, des polyéthers, des esters organiques et/ou d'autres solvants appropriés aux fins de la production de mousses souples de PU.

FIG. 1

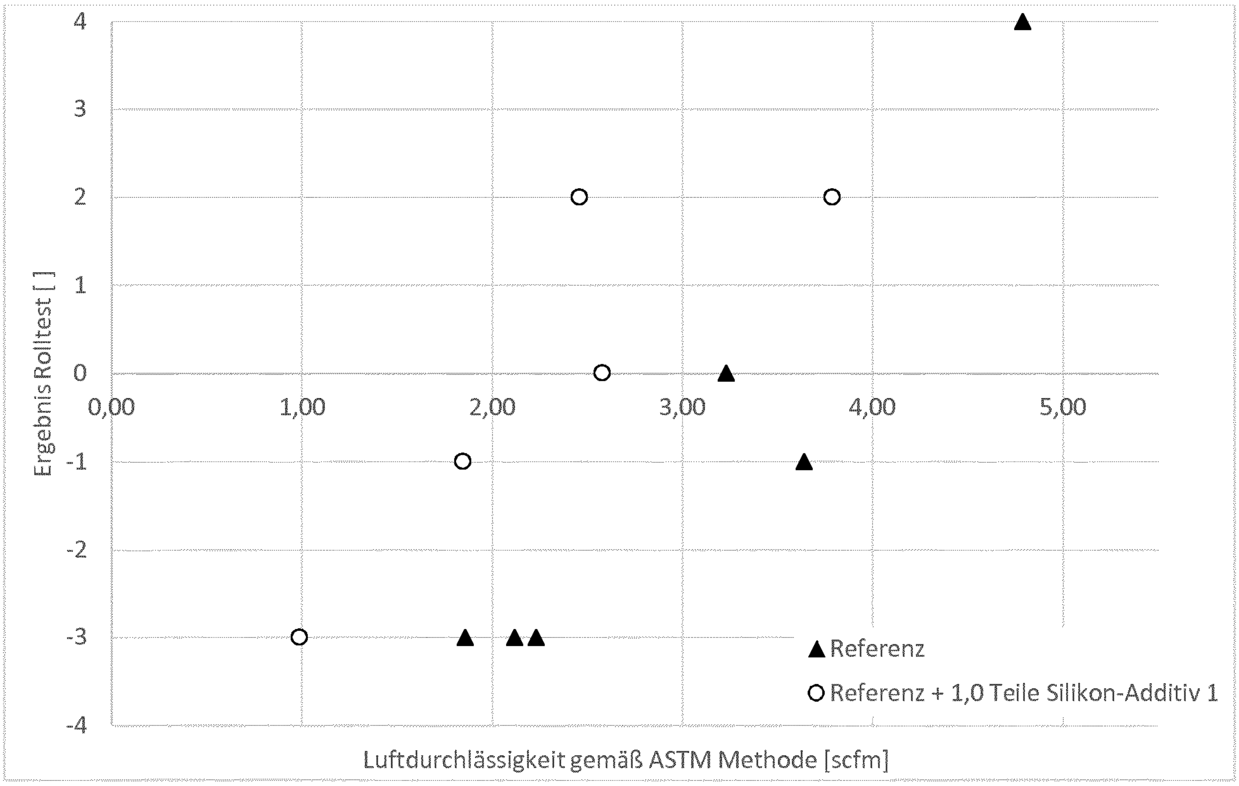
4
3
2
1
0
-1
-2
-3
-4
0,00
1,00
2,00
3,00
4,00
5,00
Ergebnis Rolltest [ ]
Luftdurchlässigkeit gemäß ASTM Methode [scfm]
Referenz
Referenz + 1,0 Teile Silikon-Additiv 1

FIG. 2

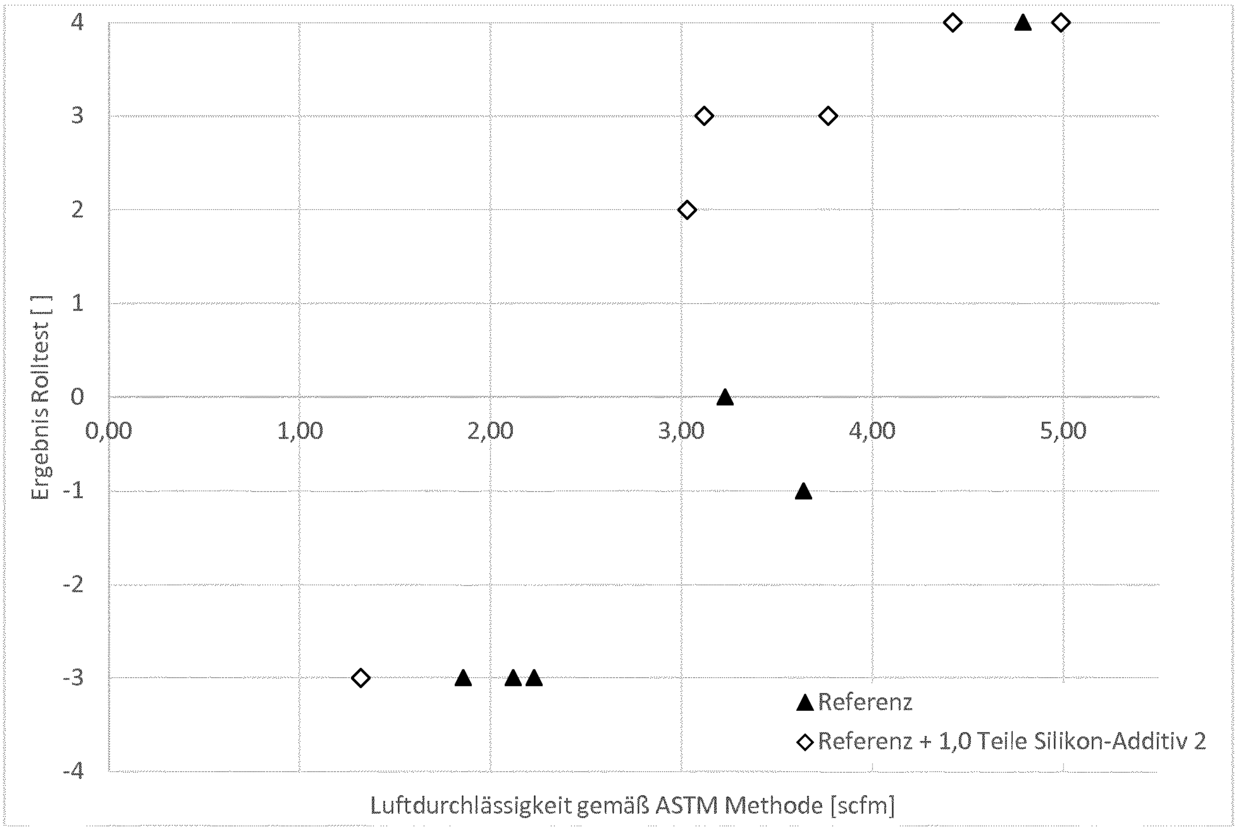
4
3
2
1
0
-1
-2
-3
-4
0,00
1,00
2,00
3,00
4,00
5,00
Ergebnis Rolltest [ ]
Luftdurchlässigkeit gemäß ASTM Methode [scfm]
Referenz
Referenz + 1,0 Teile Silikon-Additiv 2

FIG. 3

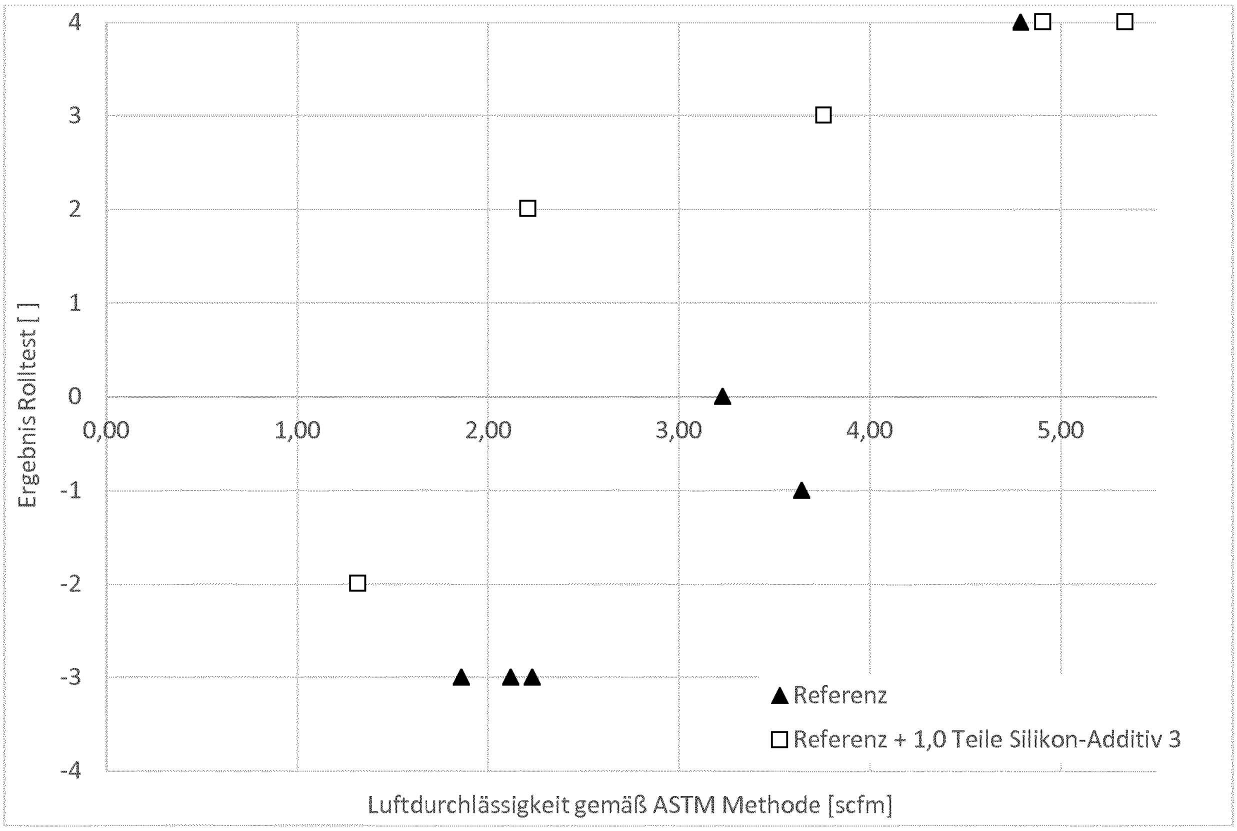

Ergebnis Rolltest [ ]
4
3
2
1
0
-1
-2
-3
-4
0,00
1,00
2,00
3,00
4,00
5,00
Referenz
Referenz + 1,0 Teile Silikon-Additiv 3
Luftdurchlässigkeit gemäß ASTM Methode [scfm]

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102006038661 A1
- EP 2481770 A2
- EP 3205680 A1
- EP 2182020 A1
- WO 2013131710 A2
- EP 1712578 A
- EP 1161474 A
- WO 0058383 A
- US 20070072951 A
- EP 1678232 A
- WO 2005085310 A
- US 20070072951 A1
- WO 2007111828 A
- US 20070238800 A
- US 6359022 B
- WO 9612759 A
- EP 0380993 A
- US 3346557 A
- DE 102007046860
- EP 1985642 A
- EP 1985644 A
- EP 1977825 A
- US 20080234402 A
- EP 0656382 B1
- US 20070282026 A1
- EP 0839852 A
- EP 1544235 A
- DE 102004001408
- WO 2005118668 A
- DE 2533074
- EP 1537159 A
- EP 533202 A
- US 3933695 A
- EP 0780414 A
- DE 4239054
- DE 4229402
- EP 867465 A
- US 4147847 A
- EP 0493836 A
- US 4855379 A
- US 2834748 A
- US 2917480 A
- US 3629308 A


### In der Beschreibung aufgeführte Nicht-Patentliteratur


- Stand 23.03.2016, entnommen werden. *Kennzeichen KAL20160323*, https://www.fsk-vsv.de/wpcontent/uploads/2017/03/Produktbeschreibunq-PUR-Kaltschaum.pdf
- *ASTM D 3574*, 2011
- Polyurethane. **CARL-HANSER**. Kunststoffhandbuch. Verlag, 1966, vol. 7